(19) **Europäisches Patentamt**
**European Patent Office**
**Office européen des brevets**

(11) **EP 1 928 134 B1**

(12) **EUROPEAN PATENT SPECIFICATION**

(45) Date of publication and mention
of the grant of the patent:
**24.03.2010 Bulletin 2010/12**

(51) Int Cl.:
***H04L 12/56*** *(2006.01)*

(21) Application number: **07122005.7**

(22) Date of filing: **30.11.2007**

(54) **Wireless networking**

Drahtloser Netzwerkbetrieb

Réseau sans fil

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **30.11.2006 GB 0623947**

(43) Date of publication of application:
**04.06.2008 Bulletin 2008/23**

(73) Proprietor: **Lidforss, Thomas
12458 Bandhagen (SE)**

(72) Inventors:
• **El Malki, Karim
00183 Roma (IT)**
• **Verin, Gianluca
36050, Pozzoleone (IT)**

(74) Representative: **Kenrick, Mark Lloyd
Marks & Clerk LLP
Sussex House
83-85 Mosley Street
Manchester
M2 3LG (GB)**

(56) References cited:
**WO-A-03/084160          WO-A-2005/109759
US-A1- 2004 182 936      US-A1- 2006 045 034
US-A1- 2006 045 055**

• **TSUNG-CHUAN HUANG ET AL: "Zone-based
hierarchical routing in two-tier backbone ad hoc
networks" NETWORKS, 2004. (ICON 2004).
PROCEEDINGS. 12TH IEEE INTERNATIONAL
CONFERENCE ON SINGAPORE 16-19 NOV. 2004,
PISCATAWAY, NJ, USA,IEEE, US, vol. 2, 16
November 2004 (2004-11-16), pages 650-654,
XP010777426 ISBN: 0-7803-8783-X**
• **LOTT M ET AL: "EXPLOITATION OF MULTIPLE
FREQUENCY CHANNELS IN WLAN"
PROCEEDINGS OF THE INTERNATIONAL
WORKSHOP ON
INTELLIGENTTRANSPORTATION, XX, XX, 1
March 2004 (2004-03-01), page 55, XP009048442**

**Description**

The present invention relates to wireless networking particularly, but not exclusively, for use in first responder applications.

A mobile ad-hoc network (MANET) comprises mobile nodes which communicate with each other without the need for fixed infrastructure, such as fixed based base stations and antennas mounted on buildings or masts. Thus, a MANET differs from a typical cellular network which uses fixed infrastructure to relay signals between mobile terminals.

In a MANET, mobile nodes discover each other and organize themselves to form a network. Each node implements networking functionality which allows them to relay signals between the mobile nodes. Thus, two mobile nodes which would otherwise be unconnected are able to communicate via intermediate mobile nodes.

Several Internet Protocol (IP) ad-hoc networking schemes are known and have been standardised by the Internet Engineering Task Force (IETF). Typically, MANETs are used to provide IP communications, such as Voice over IP (VoIP) between mobile nodes.

An arrangement known as "clustering" has been proposed to improve routing and scalability in large MANETs. Clustering involves splitting a large MANET into smaller sub-networks (i.e. clusters), each sub-network having a mobile node, referred to as a "clusterhead", that provides routing and connectivity between nodes in a sub-network and to nodes in other sub-networks.

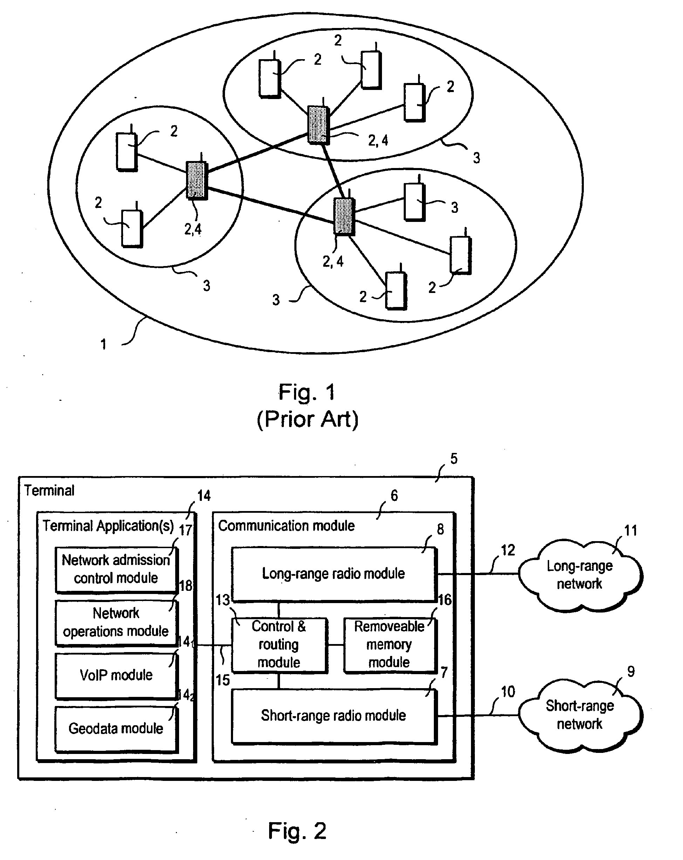

Referring to Figure 1, a conventional MANET 1 is shown. In the conventional MANET 1, mobile nodes 2 are divided into clusters 3. Each cluster 3 is formed by wirelessly connecting neighbouring mobile nodes 2. In each cluster 3, the mobile nodes 2 elect one mobile node to be a clusterhead 4. The clusterheads 4 are connected to each other to provide communication between mobile nodes 2 in different clusters 3.

Studies have been undertaken to investigate optimal cluster formation and clusterhead election. For example, "A Weighted Clustering Algorithm for Mobile Ad Hoc Networks" by M. Chatterjee, Sajal K. Das and D. Turgut (Cluster Computing 5, 193-204, 2002) proposes an algorithm for forming clusters and electing clusterheads using a weighted metric based on several system parameters including the number of nodes connected to each clusterhead (called "node degree"), transmission power, mobility and battery power of the nodes. Each mobile node connects to its neighbours and calculates its total weight metric. The node with the lowest total weight among its neighbours is elected as the clusterhead.

Existing algorithms provide a good solution for MANETs formed using standard mobile terminals, such as laptops with wireless cards, providing limited radio coverage. However, they tend not to address special requirements of MANETs used by first responders, such as the emergency services.

First responder MANETs can differ from other types of MANETs in several ways.

Firstly, a headquarters directing operations should ideally form a cluster and nodes in other clusters should be able to communicate as freely as possible with headquarters.

Additionally, there are usually pre-defined "team lists" where certain types of information are exchanged only between certain nodes in a cluster. In standard MANETs, it is assumed that any node may communicate with any other node.

Furthermore, there are pre-defined special roles for certain mobile nodes in the network that affect their suitability as clusterhead nodes. In standard MANETs, each node is assumed to be able to route data as well as any other node.

In addition, radio emissions for certain nodes may need to be limited because of their situation (i.e. those nodes may need to operate in "stealth mode"). In standard MANETs, the mode of a node is not considered when electing a clusterhead.

Moreover, certain operational situations require special handling of cluster formation. Rescue operations are typically managed by teams with specific functions. Standard MANET formation election protocols do not consider these special operational needs and would cause combination of mobile nodes belonging to different teams.

Finally, mobile wide-area radio terminals used in commercial and emergency environments, such as 3G networks, normally do not allow the terminal to have more than one active connection at any time. Instead, standard MANET operations assume that a mobile clusterhead may connect to multiple networks.

WO03/084160 describes a method and apparatus for a communication network in which nodes are capable of selective clusterhead operation. A communication device determines whether to operate as a clusterhead in a network of communication devices. This is based upon a self assessment regarding its ability to operate as a clusterhead based on a formula that assigns weights to factors related to its capabilities and preferably to its environment. The ability of the device is combined with a random value component in determining whether it should operate as a clusterhead.

The present invention seeks to provide a node for wireless networking and a wireless network which are better suited to a first responder application.

According to a first aspect of the present invention there is provided a node for wireless networking comprising: first means for providing first wireless network connectivity, second means for providing second wireless network connectivity, wherein the second wireless network connectivity has a longer range than said first wireless network connectivity, and controlling means configured to carry out first processing to determine whether the node should serve as a short-range gateway for connecting nodes in a short-range wireless network and to carry out second processing to determine whether the node should serve as a long-range gateway for co-operating with another long-range gateway in another short-range network to connect the short-range wireless networks so as to form a long-range wireless network, wherein the first processing comprises determining whether another node is serving as a short-range gateway in the short-range wireless network, and if no other node is serving as a short-range gateway, determining that the node should serve as a short-range gateway, and wherein the second processing comprises, collecting messages from other nodes and determining whether the node should serve as a long-range gateway in preference to other nodes based on a pre-determined set of rules and using sets of characteristics for the node and the other nodes, the characteristics including at least one of a node identifier, a message number, a long-range network identifier, weighting information indicating desirability to be elected, a randomly-generated number and battery level information and routing means configured, in response to the controlling means determining that the node should serve as the short-range gateway for the short-range wireless network, to route data packets between other nodes in the short-range wireless network, and in response to determining that the node should serve as the long-range gateway, to route data between the short-range network and the other short-range network .

This can allow greater control over how the short-range network is defined and how the short-range network is connected to the rest of the network.

The routing means may route packets according to internet protocol version 8. The controlling means may be configured, in response to determining that the node should serve as the long-range gateway, to periodically transmit a message identifying the node as the long-range gateway serving the short-range network. This message can help to identify the long-range network for which the long-range gateway is providing connectivity (e.g. as a client or base station) since there may be more than one long-range gateway in the same short-range network

The controlling means may be configured to search for at least one long-range base station and, in response to failing to find at least one long-range base station, to configure the long-range wireless network connectivity means to provide long-range base station functionality such that the node serves as a long-range gateway. The controlling means may be configured to search for the at least one long-range base station by listening for messages transmitted by long-range base stations.

The node may include a battery for supplying energy to the node and the controlling means is configured, in response to determining that the node should serve as the long-range gateway, to check that the battery has at least a predetermined level of stored energy. This can help to lower the rate at which the role of long-range gateway is passed from one node to another.

The controlling means may be configured, in response to determining that the battery has less than the pre-determined level of stored energy, to stop serving as the long-range gateway. This can trigger an election of another terminal as the new long-range gateway.

The controlling means may be configured, in response to determining that the node should serve as the long-range gateway, to check whether there is a competing long-range gateway. This can help resolve conflict should the node move to an area where there is another long-range network gateway.

The node may be selectively operable as a long-range client providable with a long-range network connection by a long-range base station and/or as a long-range base station to provide a long-range network connection to a long-range client.

The controlling means may be configured to search for at least one long-range base station in other short-range networks providing a first long-range gateway and, in response to finding at least one long-range base station in another short-range network, to determine whether there is already a long-range client in the short-range network connected to the long-range base station in the other short-range network providing a second long-range gateway and, in response to determining that there is no long-range client in the short-range network, to initiate an election to determine whether the node should serve as the long-range client for providing the second long-range gateway. The controlling means may be configured, in response to determining that there is no long-range client in the short-range network corresponding to the long-range base station in the other short-range network, to transmit a message listing a set of characteristics of the node. The controlling means may be operable, when the node is operating as a long-range base station, to a long-range network identifier. The controlling means may be operable, when the node is operating as a long-range client, to receive a long-range network identifier from a long-range base station and, in dependence upon the long-range network identifier, to determine whether to connect to or to participate in an election to become a long-range client to connect to the long-range base station.

The weighting information may include data indicating signal strength and data indicating seniority or role of the node's user. The controlling means may be configured to determine whether the node is winner based on a pre-determined set of rules and using the sets of characteristics. The controlling means may be configured to determine whether the node is runner-up based on a pre-determined set of rules and using the sets of characteristics. The controlling means may be configured to determine whether the node should serve as a back-up long-range gateway for co-operating with the other long-range gateway in the event that a serving gateway fails. The controlling means may be configured, in response to determining that the node should serve as the back-up gateway, to monitor the serving gateway and to serve as the gateway in response to detecting that the serving gateway fails.

The node may further include means for managing the short-range network and the node is selectively operable as a control node to manage the short-range network. The short-range network managing means may be configured, when the node is operating as the control node, to monitor quality of service and, in dependence on the quality of service, to selectively allow nodes to join the short-range network. The short-range network managing means may be configured, when the node is operating as the control node, to determine a number of connected nodes in the network and, in dependence on the number of connected nodes, to selectively allow further nodes to join the short-range network. The short-range network managing means may be configured, wherein short-range network managing means is configured, when the node is operating as the control node, to selectively allow communication between nodes in the short-range network.

The short-range network managing means may be configured, when the node is operating as the control node, in response to a node joining the short-range network, to notify other nodes in the short-range network of the identity of the node. Thus, other nodes (provided they have security clearance) may add the joining node to locally-stored lists based on its identity and/or role.

The short-range network managing means may be configured, when the node is operating as the control node, to cause filtering of communication within the short-range network.

The node may further include means for managing a network and the node is selectively operable as a network operations node to send instructions to nodes. The network managing means may be configured, when the node is operating as the network operations node, in response to a change in network organisation, to transmit a notification of the change to nodes.

The controlling means may be configured, in response to receiving notification of a change in network organisation, to update configuration data stored in a memory module.

The change in network organisation may be a change in network identifier, a change in team lists and/or a change in an allowable application operable by nodes.

The node may further include a removeably connectable memory module, wherein the controlling means is arranged to read configuration data from the memory module and to operate according to said data. The memory module may be arranged to store a user identity, a user role, a list of team members, an organisation network identifier and/or a list of teams. The controlling means may be configured to receive notification of the identity of a node and to update the list of team members. The memory module may be arranged to store information about allowable and/or unallowable applications and the controlling means is arranged to selectively route communication to and from applications provided at the node according to the application information. The node may be configured to transmit at least one of a user identity, a user role and an organisation network identifier to a short-range base station when joining a short-range network.

The controlling means may be configured, in response to receiving an instruction to enter a stealth mode, to limit transmission by the long-range wireless network connectivity providing means and to limit transmission by the short-range wireless network connectivity providing means. The controlling means may be configured, while the node is in stealth mode, disables a long-range base station and suspends determining whether the node should serve as the long-range gateway.

The controlling means may be configured, in response to receiving an instruction to enter an emergency mode, to transmit a message indicating that the node is in an emergency node when joining a short-range network or a long-range network.

The node may further comprise means for determining a location of the node and to provide the location to the controlling means. Thus, the node can communicate its location to other nodes, for example, if the node is in an emergency mode.

The node may be selectively operable as a short-range client providable with a short-range network connection by a short-range base station and/or as a short-range base station to provide a short-range network connection to a short-range client.

The controlling means may be operable, when the node is operating as a short-range network base station, to transmit a short-range network identifier. The controlling means may be configured, when the node is operating as a short-range base station, to scan for conflicting short-range base stations in the short range network and, in response to finding a conflicting short-range base station, to wait for a randomly-generated period of time, to check whether the conflicting short-range base station is still transmitting and, in response to determining that the conflicting short-range base station is still transmitting, to cause the node to cease transmitting at a currently-used short-range frequency. The controlling means may be configured to cause the node to transmit at a different frequency or to cease operating as a short-range base station. Thus, the node can cease to operate as short-range gateway. The controlling means may be operable, when the node is operating as a short-range client, to receive a short-range network identifier from a short-range base station and, in dependence upon the short-range network identifier, to determine whether to connect to the short-range base station.

The controlling means may be configured, when the node is operating as a long-range base station, to scan for conflicting long-range base stations and, in response to finding a conflicting long-range base stations, to wait for a randomly-generated period of time, to check whether the conflicting long-range base station is still transmitting and, in response to determining that the conflicting long-range base station is still transmitting, to cause the node to cease transmitting at a currently used long-range network frequency. The controlling means may be configured to cause the node to transmit at a different frequency or to cease operating as a long-range base station. If the node ceases to operate as a long-range gateway, then it can cease to operate as a long-range gateway.

The relatively short-range wireless network connectivity providing means may comprise means is configured to provide connectivity to network according to IEEE 802.11.

The relatively short-range wireless network connectivity providing means may be configured to provide connectivity to network according to a Wideband Code Division Multiple Access (WCDMA) standard or according to IEEE 802.16.

The relatively long-range wireless network connectivity providing means may be configured to provide connectivity to a public land mobile network (PLMN). The relatively long-range wireless network connectivity providing means may be configured to provide connectivity to a Wideband Code Division Multiple Access (WCDMA) network and, in particular, may conform to high-speed packet access (HSPA) protocols.

The relatively long-range wireless network connectivity providing means may be configured to provide connectivity to network according to IEEE 802.16.

According to a second aspect of the present invention there is provided a node for mobile ad-hoc networking comprising a module for providing relatively short-range wireless network connectivity, a module for providing relatively long-range wireless network connectivity and a controller configured to determine whether the node should serve as a short-range gateway for connecting nodes in a short-range wireless network and to determine whether it should serve as a lon-range gateway for co-operating with another gateway to connect, via the relatively long-range wireless network connectivity providing means, short-range wireless networks so as to form a long-range wireless network.

The node may be a portable terminal, such as a hand portable terminal, or wearable or vehicle-mountable terminal.

According to a third aspect of the present invention there is provided a network comprising a plurality of nodes, the network comprising a first node configured to serve as a short-range gateway for a short-range wireless network and a second node according to any preceding claim configured to serve as the long-range gateway for co-operating with the other gateway.

The network may further comprise a third, different node configured to serve as a back-up gateway. The second node may be configured to serve as a first gateway for co-operating with a first other gateway and the network may further comprise a fourth node configured to serve as a second gateway for co-operating with a second other gateway in another short-range network. The third, different node may be configured to serve as a back-up long-range gateway for the second long-range gateway or the network may comprise another node configured to serve as a back-up long-range gateway for the second long-range. The network may further comprise a fifth node configured to manage the short-range network by selectively allowing nodes to join the short-range network. The first node may further be configured to manage the short-range network by selectively allowing nodes to join the short-range network. The network may further comprise a sixth node configured to manage a network by sending instructions to nodes in short-range networks connected by the long-range network.

According to a fourth aspect of the present invention there is provided a method of controlling a node for mobile ad-hoc networking, the method comprising determining whether the node should serve as a short-range gateway for connecting other nodes in a short-range wireless network and, independently, determining whether the node should serve as a long-range gateway for co-operating with another gateway to connect short-range wireless networks so as to form a long-range wireless network.

According to a fifth aspect of the present invention there is provided a computer program comprising computer-readable instructions which, when executed by a computer, causes a computer to perform the method.

According to a sixth aspect of the present invention there is provided a computer readable medium storing the computer program.

In some aspects of the invention, a wireless network node of the type described above comprises wireless transmitting and receiving means, wherein the controlling means is configured to determine whether the wireless receiving means detects a signal transmitted by another wireless network node and, in response to determining that another network node is transmitting a signal, to wait for a randomly-generated period of time, to determine whether the wireless receiving means still detects a signal transmitted the other network node and, in response to determining that the other network node is still transmitting a signal, to cause the wireless transmitting means to cease transmitting at a currently-used frequency.

This can be used to help resolve conflicts in a wireless network, particularly in a mobile ad-hoc wireless network in which more than one wireless network node is vying to establish itself as a base station to serve other wireless network nodes as clients,

The signal transmitted by another wireless network node may be transmitted at a first frequency and the controlling means may be configured, in response to determining that the other network node is still transmitting a signal, to transmit at a second, different frequency. The signal may comprise a beacon signal identifying a wireless network node.

Embodiments of the present invention will now be described, by way of example, with reference to Figures 2 to 8 of the accompanying drawings in which:

Figure 1 is a schematic diagram of a conventional MANET;
Figure 2 is a schematic block diagram of functional elements of an embodiment of a terminal according to the present invention;
Figures 3a and 3b are block diagrams of a short-range radio module and a long-range radio module respectively;
Figure 4 is a schematic block diagram of circuitry of the terminal shown in Figure 2;
Figure 5 is a schematic diagram of an embodiment of a MANET according to the present invention;
Figure 6 is a flow diagram of a first process carried out by the terminal shown in Figure 2 in the formation of the MANET shown in Figure 4;
Figure 7 is a flow diagram of a second process carried out by the terminal shown in Figure 2 for detecting and resolving conflicts between base stations; and
Figure 8 is a flow diagram of a third process carried out by the terminal shown in Figure 2 for detecting and responding to low battery level.

Referring to Figure 2, a terminal 5 for use in a mobile ad-hoc network in accordance with the present invention is shown. The terminal 5 includes a communications module 6 which includes a short-range wireless module 7 and a long-range wireless module 8. In this example, the short- and long-range wireless modules 7, 8 are short- and long-range radio modules 7, 8 respectively.

The short-range radio module 7 implements a short-range radio technology, e.g. Wireless Local Area Network (WLAN), for providing connectivity to the rest of a short-range network 9 via a short-range radio interface 10. The short-range radio module 7 may conform, for example, to an IEEE 802.11 standard. As will be explained in more detail later, the short-range radio network 9 can be used to provide communications between terminals 5 that are geographically close, e.g. less than about 1000 m.

The long-range wireless module 8 implements a long-range radio technology for providing connectivity to the rest of a long-range network 11 via a radio interface 12. The long-range radio technology may be Third Generation High Speed Packet Access (3G HSPA) or conform to the IEEE 802.16 standard (often referred to as "WiMAX").

The short- and long-range radio modules 7, 8 may be integrated into a single module. Furthermore, the short- and long-range networks may be based upon the same protocol or standard, but transmit at different power levels.

Referring still to Figure 2, the communications module 6 includes a control and routing module 13 which controls operation of the short- and long-range radio modules 7, 8, implements Internet Protocol routing, in this case Internet Protocol version 6 (IPv6) routing, executes a node election function and performs other control functions. The communications module 6 may implement routing based on IPv4 or other protocols.

The routing function uses reactive and proactive ad-hoc routing protocols, such as Ad-hoc On-Demand Distance Vector (AODV) and/or Optimized Link State Routing (OLSR), developed by the Internet Engineering Task Force (IETF). Such ad-hoc routing protocols allow routing of packets transmitted and received via the short- and long-range radio network interfaces 10, 12. The control functions are described in more detail hereinafter.

The control and routing module 13 communicates with terminal applications 14, such as a Voice-over-Internet Protocol (VoIP) module $14_1$ and geodata module $14_2$, or custom applications for tactical or emergency operations, via interface 15. The interface 15 enables applications to configure IP addresses and perform IP communications that the control and routing module 13 can direct appropriately over the short- or long-range networks 9, 11 according to the ad-hoc routing function.

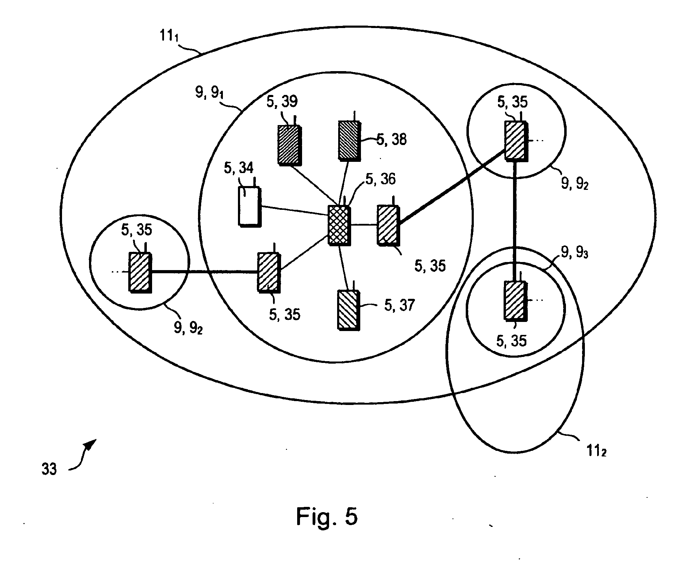

The communications module 6 also includes a removable memory module 16 for storing networking and user information. Such information can be changed locally, e.g. via manual configuration, or remotely, e.g. according to messages received from a network operations node 39 (Figure 5). In particular, the removable memory module 16 stores a user identifier, a user role, a list of team members, organization network identifiers and a list of teams. The removable memory module 16 also stores a list of applications that the node is allowed to use and/or not allowed to use. The control and routing module 13 communicates with applications via the interface 15 and is able to block unauthorised or disallowed applications from accessing the short- or long-range networks 9, 11 by implementing IP packet filtering using the application information stored on the removable memory module 16. For example, a given user may be excluded from using an emergency application and so the control and routing module 13 may block packets coming from or going to that application.

As will be explained in more detail later, the terminal applications 14 includes a network admission control function 17 and a network operations function 18.

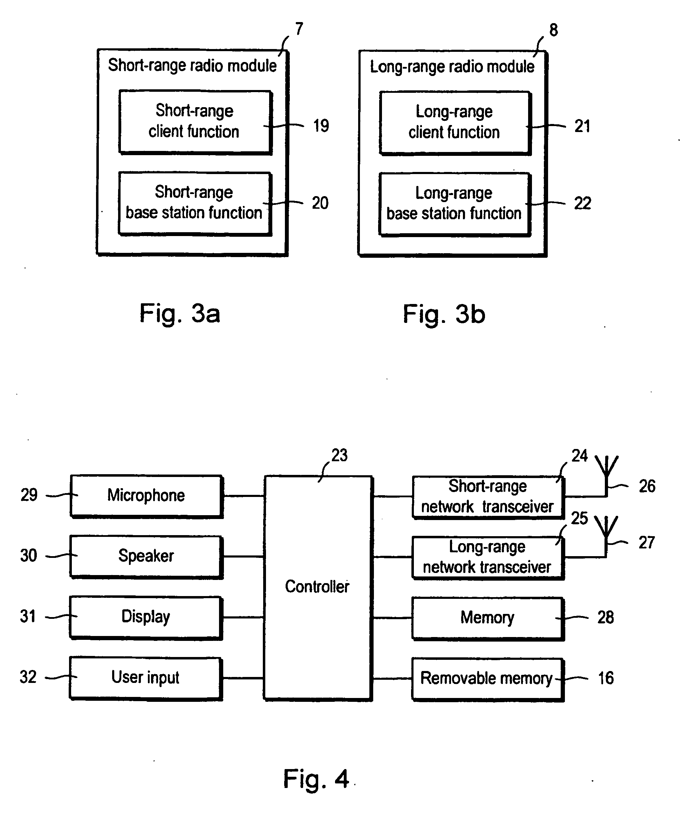

Referring to Figure 3, the short- and long-range radio modules 7, 8 are shown in more detail. The short-range wireless module 7 comprises a short-range network client function 19 and a short-range base station function 20. The short-range client 19 implements functionality typically provided by a WLAN PC card, while the short-range base station 20 implements functionality typically provided by a WLAN Access Point. As will be described in more detail hereinafter, a short-range network client 19 (in a first communication module 6) is served by a single short-range base station 20 (in a second, different radio module 6). However, a short-range base station 20 can serve more than one short-range network client 19.

The long-range radio module 8 comprises a long-range client function 21 and a long-range base station function 22. The long-range client 21 implements some of the functionality typically provided by a mobile phone handset, while the long-range base station 22 implements some of the functionality typically provided by a cellular base station and cellular network, as will be described in more detail hereinafter. As will also be described in more detail hereinafter, a long-range network client 21 in a first communication module 6 connects to a long-range base station 22 in a second, different radio module 6, serving two, different short-range networks. In this example, the long-range radio module 8 is implemented as a network card.

Referring to Figure 4, in this example, the terminal 5 is implemented as a hand portable communications device. The terminal 5 includes a controller 23 for processing data (e.g. voice coding and decoding) and controlling operation of the terminal 5.

The terminal 5 includes a short-range network transceiver 24 and a long-range network transceiver 25 provided with respective antennas 26, 27. The terminal 5 also includes fixed memory 28 storing, among other things, software (not shown) for controlling operation of the terminal 5, and removable memory 16. The terminal 5 also includes a microphone 29, a speaker 30, a display 31 and a user input 32, for example in the form of a keypad, joystick and/or touch screen. It will be appreciated that the terminal 5 can be configured differently and may include, for example, a separate digital signal processor (DSP), a separate voice coder/decoder, additional amplifiers etc. The controller 5 may be implemented using central processing unit (CPU) chipsets, DSP chipsets and radio base-band chipsets.

The controller 23 executes software which causes the terminal 5 to provide functions shown in Figure 2, such as the control and routing module 13 and terminal applications 14.

The terminal 5 need not be a hand portable communications device. For example, the terminal may be mountable in a vehicle or wearable on a person. The terminal 5 may be integrated as a communications unit in another device. The terminal 5 may be a computer system. The communications module 6 may be provided in the form of one or more communication network cards (not shown), removeably insertable into a computer system (such as a laptop computer) for allowing the computer system to operate as a terminal 5 for wireless networking, e.g. mobile ad-hoc networking.

As will be explained in more detail hereinafter, the terminal 5 may implement functions of one or more components (e.g. terminal and/or node) in a radio-based communications system and so the controller 23 executes appropriate software which causes the terminal 5 to provide these functions.

For example, in the case of 3G HSPA, the terminal 5 may implement the functions of a mobile terminal, namely a User Equipment (UE), and the functions of a network node, namely Node B, Radio Network Controller (RNC), Serving GPRS Support Node (SGSN), Gateway GPRS Support Node (GGSN), Mobile Switching Centre (MSC) and Home Location Register (HLR).

In the case of IEEE 802.16 (WiMAX), the terminal 5 may implement the functions of the WiMAX handset, namely Mobile Node (MN), and the functions of a network node, namely Base-Station (BS), Access Service Network Gateway (ASN-GW) and Connectivity Service Network (CSN).

In the case of IEEE 802.11 (WLAN), the terminal 5 may implement the function of a terminal, namely WLAN client, and the functions of a network node, namely an Access Point (AP).

Referring to Figure 5, a mobile ad-hoc network 33 in accordance with the present invention is shown. The network 33 includes a plurality of terminals 5, each providing a different function, such as a mobile node 34, a long-range gateway node 35, a short-range gateway node 36, a backup long-range gateway node 37, an admission control node 38 or a network operations node 39. As will be explained in more detail hereinafter, a terminal 5 can operate as more than one type of node.

A terminal 5 operating as a mobile node 34 executes the short-range client function 19 (Figure 3a) that allows it to connect to other terminals 5 within a short-range network 9. Communication between the mobile node 34 and other nodes 34, 35, 36, 37, 38, 39 is based on IPv6.

The terminal 5, operating as a mobile node 34, can be elected, according to an election procedure described later, to become a long-range gateway node 35, a short-range gateway node 36, a backup long-range gateway node 37 or an admission control node 38. Long-range gateway nodes 35 co-operate to exchange signals and traffic so as to connect short-range networks $9_1$, $9_2$, $9_3$, $9_4$. For a pair of long-range gateway nodes 35, one operates as a long-range base station and one operates as a long-range client.

Thus, the terminal 5 can be a short-range gateway when its short-range base station function 20 is enabled and can be a long-range gateway when its long-range client function 19 and/or its long-range base station function 20 is enabled. When a terminal 5 operates as a short-range gateway 36, it functions as a short-range base station 20 and other terminals 5 in the short-range network $9_1$ (i.e. connected to the short-range gateway 36) operate as short-range clients 19. However, when a terminal 5 operates as a long-range gateway 35, it can function either as a long-range client 21 or as a long-range base station 22. If the terminal 5 has two (or more) long-range wireless modules 8, then, it can function as a long-range client 21 and as a long-range base station 22 simultaneously.

Each short-range network 9 includes all six types of node. For simplicity, Figure 5 shows each terminal 5 in a first short-range network $9_1$ implementing a different type of node. However, a terminal 5 may concurrently implement more than one type of node. Furthermore, for clarity, Figure 5 does not show all six types of nodes in the other short-range networks $9_2$, $9_3$, $9_4$.

A terminal 5 operating as a long-range gateway node 35 executes the short-range client function 19 (Figure 3a) and the long-range client function 21 (Figure 3b) and/or the long-range base station function 22 (Figure 3b). Each terminal 5 also implements, in their respective control and routing modules 13, ad-hoc routing which enables the terminal 5 to forward packets (e.g. IPv6 packets) between short-range network interface 10 and long-range network interface 12 in either direction. Thus, the long-range gateway nodes 35 connect the short-range networks 9 via a first long-range network $11_1$. The long-range gateway nodes 35 are chosen, through a gateway election mechanism, to optimise several factors including network operations and battery usage. The mobile ad-hoc network 33 may include more than one long-range network, such as a second long-range network $11_2$.

In this example, a single long-range gateway node 35 can make only one connection using only one long-range radio interface 12 (Figure 2). In other words, the long-range gateway node 35 has one long-range radio module 8 (Figure 2) which can make only one connection via one long-range radio interface 12 (Figure 2). Therefore, to enable connection between multiple short-range networks 9, more than one long-range gateway node 35 in the same short-range network 9 is used. However, in some embodiments, long-range gateway node 35 (Figure 2) may have more than one long-range radio module 8 (Figure 2) and so the node 35 can support multiple connections.

As shown in Figure 5, two terminals 5 are selected as long-range gateway nodes 35 in the first short-range network $9_1$. A process by which long-range gateway nodes 35 are elected will be described in more detail later.

A long-range gateway node 35 enables the short-range client function 19 (Figure 3a) for the purpose of connecting the node to other nodes in the same short-range network $9_1$. A long-range gateway node 35 may also enable the long-range client function 21 (Figure 3b) and/or the long-range base station function 22 (Figure 3b). For example, a long-range gateway node 35 may enable the long-range client function 21 (Figure 3b) if the node is elected to provide long-range connectivity to a given short-range network $9_2$, $9_3$, i.e. to connect to an active long-range base station function 22 (Figure 3b) of a node in the given short-range network $9_2$, $9_3$. Also, a long-range gateway node 35 may enable the long-range base station function 22 (Figure 3b) if there are no networks to which it can connect, i.e. no other short-range networks 9 with a node having an active long-range base station function 22 (Figure 2). In this case, the long-range gateway node 35 operates as a moving base station for the purpose of providing connectivity to other long-range gateway node 35 that are within the reach of the long-range radio network 11 and within the reach of the moving base station. The long-range gateway node 35 advertises its presence and which network it is serving with which function (e.g. base station for network "xyz") by transmitting a "LR gateway hello" message at regular intervals to all the nodes in its short-range network 9. In this example, this is implemented as an IPv6 multicast message (not shown) sent to a reserved multicast address for communication, to which all the nodes subscribe. The message includes a message type (not shown) identifying it as a "LR gateway hello" message and also a network identifier (not shown) of the network that the long-range gateway node 35 is handling. The network identifier depends on the type of long-range radio technology used. For instance, for 3G radio systems, the network identifiers may be a Public Land Mobile Network (PLMN) Identifier or a Routing Area Identifier (RAI) and Cell Identifier. Other nodes can determine the presence of long-range gateway node 35 by listening to these multicast packets. Nodes forward these messages onto other nodes so as to propagate the messages to all nodes in the short-range networks 9.

A terminal 5 that is runner-up (i.e. second best) in the long-range gateway election is chosen as the backup long-range gateway node 37 and executes the short-range client function 19 (Figure 3a). The backup long-range gateway node 37 monitors "LR gateway hello" messages broadcast by the long-range gateway nodes 35 in its short-range network 9. If the backup long-range gateway 37 detects that the long-range gateway node 35 has failed (because it no longer receives "LR gateway hello" messages), then it immediately takes over its role and becomes the new long-range gateway node. This allows the network to heal itself very quickly if a long-range gateway node 35 fails.

A short-range network 12 may have more than one long-range gateway 37. However, even though each long-range gateway 35 has a backup long-range gateway node 37, the same node 5 may serve as a back up long-range gateway 37 to more than one gateway 35.

A terminal 5 which operates as a short-range gateway node 36 executes the short-range base station function 20 (Figure 3a). The short-range gateway node 36 provides routing (e.g. IPv6 and/or Medium Access Control (MAC) connectivity) to all nodes within its short-range radio reach in the short-range network 9. The short-range gateway node 36 implements ad-hoc routing and/or MAC-based routing (such as Ethernet IEEE 802) using the control and routing module 13 (Figure 2) which enables it to forward packets between all instances of the short-range interface 10 to which it is connected.

A terminal 5 which operates as an admission control node 38 controls the team list configurations, blocks banned communications and monitors the number of nodes and the quality of service levels in its short-range network 9. The admission control node 38 executes an admission control function 17 (Figure 2).

The admission control node 38 monitors the quality of service in the short-range network by, for example, (i) monitoring the number of nodes in the short-range network (ii) obtaining statistics measurements from each node in the short-range network 9 to identify whether throughput has exceeded a predetermined maximum and (ii) injecting returnable traffic into the network and measuring the round-trip latency times. The statistics measurements can be implemented using standard network management practices, such as Simple Network Management Protocol (SNMP) alarms or traps. Using such mechanisms, nodes report abnormal behaviour to the admission control node 38, including whether load threshold have been exceeded.

If the quality of service level falls too low, the admission control node 38 blocks new mobile nodes from joining the short-range network. This is achieved by instructing the short-range gateway node 36 which, in turn, prevents new nodes from joining. In the examples hereinbefore described, the quality of service may have fallen too low when the number of nodes, load and/or latency measurements exceed their thresholds.

An exception may be made in an emergency when a user of a node has been separated from the rest of their team and/or is in danger. In this case, as soon as the node connects to the short-range gateway node 36, it transmits as its first message an "emergency mode" message to the short-range gateway node 36 informing it that the node is in emergency mode so that the short-range gateway node 36 can allow it to maintain a connection with the short-range network 9 and communicate with other nodes even if this results in the quality of service dropping below threshold. The emergency mode may be enabled manually by the user or it may be enabled automatically by the node based on an analysis of geographical location data (e.g. using a Global Positioning System module) and the number of connections to other nodes in its team, e.g. when it determines that the node has become separated from its team and is in a danger zone. The "emergency mode" message may also include geographical location data obtained using, for example, triangulation and/or the Global Positioning System.

The admission control node 38 also communicates with the short-range gateway node 36 to send updated filtering policies to it. Such policies are used to prevent certain nodes from connecting to other nodes if this is not allowed by the rules of operations. For example, a node being used by a junior operator may not have the right level of skill or security clearance required to communicate with certain other nodes in the network. This also prevents malicious use of stolen nodes. The admission control node 38 automatically obtains the updated filtering lists from authorised entities in the network 33, such as a remote security headquarters (not shown). The admission control node 38 may also obtain list updates from a network operations module 18 (Figure 2) of any terminal 5 that has security clearance. Such a list includes stolen or banned nodes. The admission control node 38 blocks the corresponding address (e.g. IPv6 or Medium Access Control address) of disallowed nodes by communicating the filtering list to the short-range gateway node 36 and other members in its short-range network 9. The short-range gateway node 36 consequent to receiving such a filtering list can implement a packet filtering function (similar to a firewall) that blocks disallowed communications.

The admission control node 38 also manages the team lists. A team list is a list of nodes involved in voice and data communications based on operational needs (e.g. a team list can include a team leader and their team members). There may be one or more operational teams within each short-range network 9. Therefore, there may be one or more team lists to be managed by the admission control node 38. The admission control node 38 and removable memory modules 16 (Figure 2) in the nodes may be configured before deployment with the team lists describing which nodes belong to which team list. This allows the memory module 16 (Figure 2) to be removed and connected to any other node, thus automatically reconfiguring that node with new settings including the team lists.

Nodes within a short-range network 9 participate in ad-hoc routing where addresses and roles of the users of the nodes (e.g. team leader) are advertised. The admission control node 38 uses this information to update the team lists, which requires updating when nodes leave or join the short-range network 9. The admission control node 38 communicate with all nodes within the short-range network 9 to transmit updates to the team list configurations. In some embodiments, the admission control node 38 and the short-range gateway node 36 are implemented by the same physical node, by the same terminal 5.

The mobile node 34 is the simplest node type and executes the short-range client function 19 (Figure 3a) in the short-range radio module 7. The mobile node 34 also executes terminal applications 14 (Figure 2), such as Voice-over-IP, and the control and routing module 13 (Figure 2). Thus, the mobile node 34 also implements the ad-hoc routing to obtain connectivity to other nodes, such as the long-range gateway nodes 35.

A terminal 5 which operates as a network operations node 39 executes the same functions as the mobile node 34 and additionally executes a special type of terminal application, namely the network operations function 18 that enables configuration of the nodes.

The network operations node 39 may set to configure only nodes within its short-range network 9 or set to configure all nodes within the long-range network 11. The network operations node 39 is able to communicate with the control and routing module 13 (Figure 2) in each node by sending messages to the address of the node. These messages include instructions to the control and routing module 13 (Figure 2) to perform actions to delete or change the information stored in the removable memory module 16 (Figure 2).

It will be appreciated that not all the terminals 5 in the mobile ad-hoc network 33 need be provided with a long-range wireless module 8 (Figure 2). However, those terminals 5 without a long-range wireless module 8 (Figure 2) cannot implement long-range network base station function 20 (Figure 3b) or long-range network client function 19 (Figure 3b) and, thus, cannot serve as a long-range network gateway node 35 or back-up gateway 37.

The nodes, in whichever mode they operate, each execute a process that will now be described in more detail.

Referring to Figures 2 to 6, the process (re)starts whenever a node (in this case, terminals 5) is switched on or reset, or if a short range gateway node 36 to which a node is connected can no longer be reached.

The control and routing module 13 waits for a randomly-generated period of time, for example within a range of 1 to 30 seconds (step S601), then enables the short-range client function 19 to perform a short-range radio network scan to detect available short-range networks or base stations, i.e. instances of the short-range base station function 20 within its radio coverage (step S602). The initial random waiting time, using a reliable random number generator, helps to avoid terminals 5 performing the steps at the same time and so minimises message collisions. For each detected base station 36, the terminal 5 adds an entry to a list of short-range networks (step S603). The entry includes a network name and any identifiers broadcast by the base station. For example, in a WLAN network, the short-range network list includes a Service Set Identifier (SSID) and a Base Service Set Identifier (BSSID) contained in a WLAN base station beacon received by the short-range client function 19.

The control and routing module 13 checks whether there is at least one network in the short-range network list (step S604).

If there is no network in the list, then the control and routing module 13 enables the short-range base station function 20 (step S605). Consequently, the node takes over (or continues operating) as the short-range gateway node 36 and, optionally, the admission control node 38. The control and routing module 13 also disables the short-range client function 19 (step S606).

The control and routing module 13 enables a periodic scan for duplicate short-range base stations 36 to determine whether other short-range base station function 20 appear within radio coverage and, if so, to resolve conflict (step S607). This is a possibility since nodes are mobile and may move at any time. The control and routing module 13 carries out duplicate base station detection and conflict resolution in the background (which is described in more detail hereinafter), while the short-range base station function 20 is enabled.

The control and routing module 13 executes ad-hoc routing (step S608) which is described in more detail hereinafter.

If there is at least one network in the short-range network list, then the control and routing module 13 parses the list to remove any networks with invalid identifiers (step S 409). The validity of networks may be assessed, for example, by matching the network identifiers broadcast by the base station being validated against known base station identifiers. Each node maintains a list of known base station identifiers that is used for this purpose and such a list is updated using information communicated using, e.g.IPv6, messages from authorised entities in the network, such as the admission control node 38. An update may be sent if a node is stolen or lost and should be excluded from participating in network communication.

Once invalid networks have been purged from the short-range network list, the control and routing module 13 selects one of the remaining networks based on parameters and identifiers broadcast by the corresponding base station (step S610).

For example, a mobile node may be part of a team with a common team identifier (e.g. WLAN SSID or portion of SSID) in which case the short-range network matching the common team identifier is selected. This allows a node to connect only to a short-range network (i.e. a short-range base station) that belongs to the same team grouped for a certain mission or organisation.

If a node is in an "emergency" state, due to being in a dangerous situation, then connection to any network is allowed even if the short-range base station does not belong to the same team or organisation. The "emergency" state can be enabled either manually by the user (e.g. by pressing a button or voice activation) or automatically (e.g. by the node straying beyond a given distance from the nearest other node). This allows a node to join the network of another team or organisation, urgently if necessary.

If none of the short-range networks match the selection criteria, then any network can be selected. If there is only one validated short-range network in the list with a matching identifier, then the selection is trivial.

After a short-range network has been selected, the short-range network client 19 tries to connect to the short-range network in a secure manner using standard radio and IP security authentication mechanisms (step S611).

The control and routing module 13 checks whether connection and authentication were successful (step S612).

If the short-range network client 19 tried unsuccessfully to connect and authenticate with the short-range network, then the control and routing module 13 removes the short-range network from the short-range network list (step S613) and the control and routing module 13 checks whether any short-range networks remain in the short-range network list (step S604).

If, however, the short-range network client 19 successfully connects and authenticates with the short-range network, then the control and routing module 13 executes ad-hoc routing (step S608). If the node is in emergency mode, it will also send an "emergency mode" message to the short-range gateway node 36.

At this point, the node has successfully completed the functions needed to be able to communicate with other nodes in the same short-range network, such as the first short-range network $9_1$. In the following steps, the control and routing module 13 independently determines whether the node should perform other functions required to deliver connectivity between its short-range network and the long-range network (i.e. connectivity to external short-range networks). The control and routing module 13 carries out these steps for each long-range module 8. If a terminal 5 does not have a long-range module 8, then the following steps are not performed by that terminal.

The control and routing module 13 enables the long-range client function 21 to perform a long-range radio network scan to find available long-range networks or base stations, i.e. instances of long-range base station function 22, within its radio coverage (step S614).

For each detected long-range base station, the control and routing module 13 adds an entry to a list of long-range networks (step S615). The entry includes a network name and any identifiers that are broadcast by the base station. For example, in a 3G HSPA network, the entry may include any of several parameters, including the Public Land Mobile Network (PLMN) ID, the RAI and Cell Identifier contained in the base station broadcast information received by the long-range client function 21. The control and routing module 13 also checks for long-range gateway nodes (base stations or clients) within its short-range network using "LR gateway hello" messages hereinbefore described (step S616).

If, at any point, the long-range radio interface 10 is disconnected or the long-range radio module 8 is restarted, then the control and routing module 13 enables the long-range client function 21 to perform a long-range radio network scan (step S614).

If the control and routing module 13 does not detect any long-range network (step S617), then it enables the long-range base station function 22 (step S618) and the node takes over as a long-range gateway node 35 (step S619). The functions of the long-range gateway node 35 include routing data packets (e.g. VoIP data packets) between short- and long-range interfaces 10, 12 (Figure 2). Thus, a long-range network client 21 (Figure 3b) in one long-range network gateway 35 connects to a long-range network base station 22 (Figure 3b) in another long-range network gateway 35. The long-range gateway node 35 transmits "LR Gateway Hello" messages (not shown) to nodes within the short-range network and is described in more detail hereinafter. The control and routing module 13 enables a periodic function to check the battery level to determine whether the battery level is too low for the purpose of performing power-consuming long-range operations (step S619). This process is hereinafter described in more detail.

In some embodiments, the long-range network gateway 35 enables either the long-range network client 21 (Figure 3b) or the long-range network base station 22 (Figure 3b) so as to conserve power. However, in other embodiments, the long-range network gateway 35 may enable both functions 21, 22, for example when a terminal 5 has a long-range network module 12 including two network cards.

The control and routing module 13 checks whether there is a conflict with another long-range base station function 22 in the same radio coverage area. The control and routing module 13 determines whether such a conflict exists and takes appropriate action (step S621).

The control and routing module 13 determines whether such a conflict exists by taking measurements with the long-range client function 21 to ascertain whether there is significant interference on the radio channel being used by the local (i.e. colocated in the same terminal 5) long-range base station function 22. If the control and routing module 13 does not detect any conflict, then it allows the long-range base station function 22 to continue operating. The check is periodically repeated. If, instead, the control and routing module 13 detects a conflict, then a long-range base station resolution procedure is performed and this is hereinafter described in more detail.

If the control and routing module 13 detects at least one long-range network, then it determines whether each network in the long-range network list has a corresponding long-range gateway node (step S622). A corresponding long-range gateway node is a node operating as a long-range client or base station within a short range network. The node transmits "LR Gateway Hello" messages (not shown) received from the control and routing module. A corresponding long-range gateway node has a network identifier which it transmits in the "LR Gateway Hello" message that matches the one broadcast by the detected long-range network.

If the control and routing module 13 determines that all the detected long-range networks are served by a long-range gateway node, then it continues to scan for long-range radio networks (step S614).

If, however, the control and routing module 13 determines that at least one detected network is not already served by a long-range gateway node, then it starts a gateway election procedure (step S623). The gateway election procedure is used to select the best node to perform gateway functions for each long-range network. A node will not participate in the election procedure if it is in emergency or stealth mode.

Each node taking part in the election transmits a specially formatted "LR Gateway Election" broadcast packet (e.g. in the form of a IPv6 broadcast packet) to all other nodes within the same short-range network. The message includes a message type identifying it as a "LR Gateway Election" message and also contains parameters needed to select the election winner.

The election parameters may include a sending node identifier, a message number, network identifier, priority value, random draw number and/or a battery-level value.

The sending node identifier is used to identify the node sending the message and which is participating in the election. The message number is used to identify uniquely the message in a sequence of messages sent by the sending node. The network identifier is used to identify the network that the sending node has detected. Different formats for network identifier can be used depending on the type of long-range radio technology being used, such as a PLMN Identifier, RAI and Cell Identifier for 3G radio systems. The priority value is a score that the sending node calculates by combining parameters such as radio signal quality and the user's team or organization. A higher priority value can be used to signify that the sending node has a higher priority to be elected as the long-range gateway node. The priority level is calculated by combining the following parameters: quality of network signal (e.g. signal-to-noise ratio) and the user's seniority/adequacy of team or organization role. For example, the priority level may be calculated as follows:

$$\text{priority value} = \text{role value} + \text{signal quality value} \qquad (1)$$

where
role value = 0 (junior human) or 2 (leader human) or 5 (vehicle)
signal quality value = 0 (weak signal) to 5 (strong signal)

The random draw number is a randomly-generated integer number (e.g. 32 bits long) used to resolve a draw between two nodes with the same priority value. The battery level value is used to identify the remaining battery level of the sending node. If the sending node has battery power greater or equal to a predetermined threshold, then battery level takes a value of 1, otherwise it has a value of 0. A node with a battery level value of zero cannot be elected as a long-range gateway node.

All nodes receive and immediately process these "LR Gateway Election" multicast messages. If required, nodes may also forward such messages onto other nodes so as to propagate the messages amongst all nodes in the short-range network. In this example, a message is uniquely identified by a message number and a sender node identifier and is forwarded only once by each node to each neighbouring node (i.e. a node connected thereto).

A predefined time interval (e.g. between 1 to 120 seconds) after the start of the election procedure, each node compiles a table from all the received messages placing content of each message in a separate entry in the table.

The node taking part in the election and having the highest priority value for a network identifier is elected as winner and takes on the function of long-range gateway node 35. The node with the second-best priority value for the same network becomes the backup long-range gateway node 37 for that network. If two sending nodes have the same priority value, then the highest random draw number will be used to select the winner. A node having a battery level value of zero cannot be elected as a long-range gateway node or backup long-range gateway node.

The election procedure is completed once the first "LR Gateway Hello" message is received from the winner, even if this occurs before the predefined time interval above has elapsed.

The control and routing module 13 determines whether its terminal 5 has won the election (step S624).

If the control and routing module 13 determines that it has lost the election, then it continues to scan for long-range radio networks (step S614).

If, on the other hand, the control and routing module 13 determines that it has won the election, then it establishes a connection with the long-range network for which it has won the election and takes on the function of long-range gateway node for that network by enabling the long-range client function and connecting to the long-range base station function corresponding to the long-range network for which it has won the election (step S625). The control and routing module 13 sends out a "LR Gateway Hello" broadcast packet (e.g. in the form of an IPv6 broadcast packet) to all other nodes within the same short-range network at regular time intervals as described previously (step S626). The control and routing module 13 enables a function to perform a periodic battery level check to detect whether the node's battery level is too low for the purpose of performing power-consuming long-range operations (step S627).

As explained earlier, a situation can arise when more than one terminal can serve as a short-range base station in a short-range network. Similarly, a situation can arise when more than one terminal can serve as a long-range base station to connect one short-range network to one or more other short-range networks.

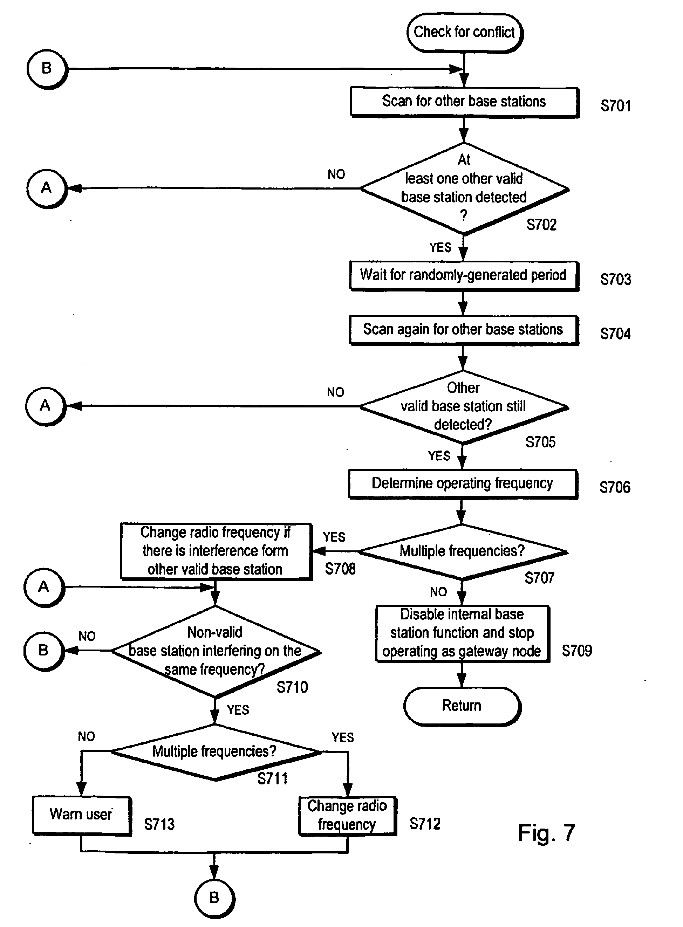

Referring to Figures 2, 3, 5 and 7, a flow diagram illustrating a method of detecting duplicate long-range or short-range base stations and resolving the conflict between duplicate base stations is shown.

To identify duplicate base stations for short- or long-range networks, the control and routing module 13 enables the appropriate client function (step S701). Thus, to identify duplicate long-range base stations 35, the control and routing module 13 enables the long-range client function 21 and, to identify duplicate short-range base stations 36, the control and routing module 13 enables the short-range client function 19. The control and routing module 13 performs a network scan to detect whether there are any other active base stations within radio coverage, i.e. base stations operating at other terminals.

The control and routing module 13 determines whether at least one other valid base station has been detected (step S702). The control and routing module 13 can validate a base station by (i) matching network identifiers broadcast by the base station with known base station identifiers and/or (ii) successfully authenticating and connecting the long-range or short-range client function respectively (as appropriate) to the long-range or short-range base station being validated.

If the control and routing module 13 detects no other base station, then it continues to scan for other active base stations within radio coverage at periodic intervals (step S701).

If the control and routing module 13 detects at least one other valid base station, then the control and routing module waits for a randomly generated interval, e.g. between 1 to 10 seconds (step S703) and repeats the network scan (step S704).

The control and routing module 13 again determines whether there is at least one other valid base station (step S705).

If the previously detected station(s) is (are) still detected, then the control and routing module 13 determines the operating frequency (step S706) and operates the appropriate radio module 7, 8 in (predefined) multiple or single frequency mode (steps S708 to S710).

A different setting can be enabled for the long-range and short-range module 7, 8. Configuration of the radio module 7, 8 can be set before the terminal is deployed (e.g. factory set) or remotely set (e.g. using a remote operation and maintenance procedure). In multiple frequency mode, the node is able to select any one of several frequencies (for a radio module) on which to operate. In single frequency mode, the node has only has one operating frequency (for a radio module).

If the terminal 5 can transmit and receive at any one of several frequencies, then the control and routing module 13 sets the appropriate base station function 20, 22 to use a different frequency from the one previously used (step S709) and continues to monitor for other base stations (step S701).

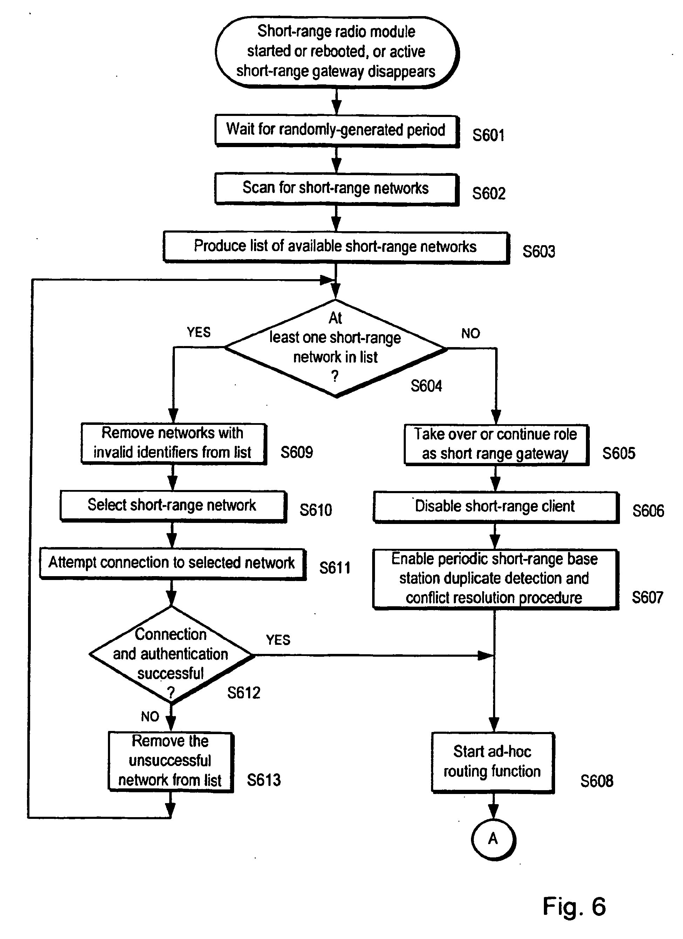

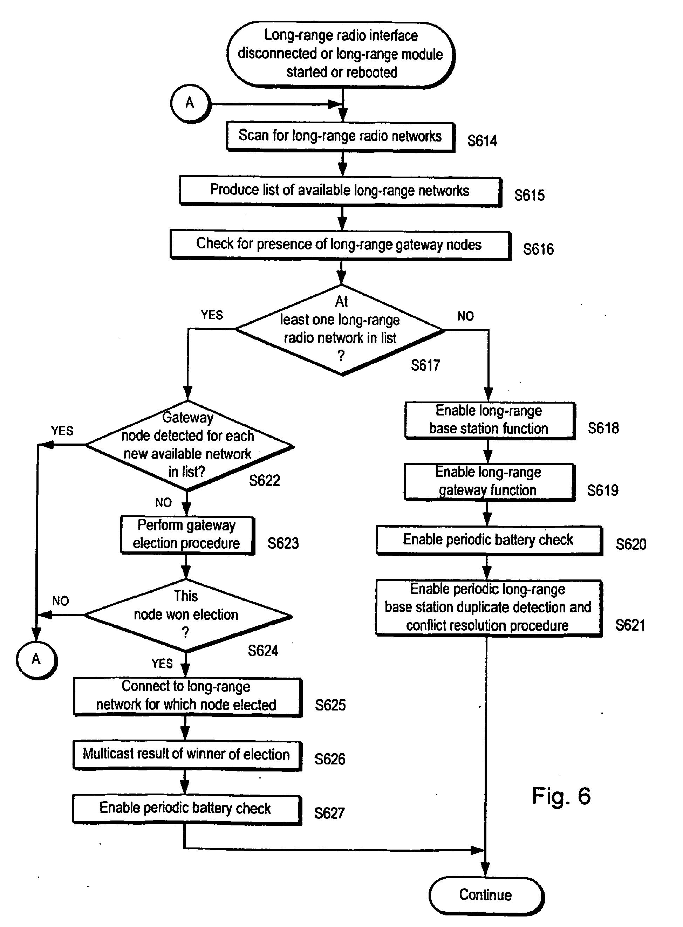

If, however, the terminal 5 is supports transmission and reception at only a single frequency mode, then the control and routing module 13 disables its internal base station function and stops functioning as gateway node (step S710). This causes a new gateway node to be selected. Thus, if the short-range base station function 20 is disabled, then the process returns to step S601 (Figure 6). If the long-range base station function 22 is disabled, then the process returns to step S614 (Figure 6).

If the previously detected station(s) is (are) no longer detected at step S705 or if the there is a change in frequency at step S709, then the control and routing module 13 continues to monitor for other base stations and determines whether a invalid base station interferes at the same, new frequency (step S710). Otherwise, the control and routing module 13 continues to monitor for other base stations (step S701).

If multiple frequency operation is supported (step S711), then the control and routing module 13 changes operating frequency (step S712). Otherwise, if multiple frequency operation is not supported and so there is no opportunity to change frequency, the control and routing module 13 warns the user, for example by displaying a message or sounding an alarm, that another (long- or short-range) network is operating at the same frequency (step S713). The control and routing module 13 continues to monitor for other base stations (step S701).

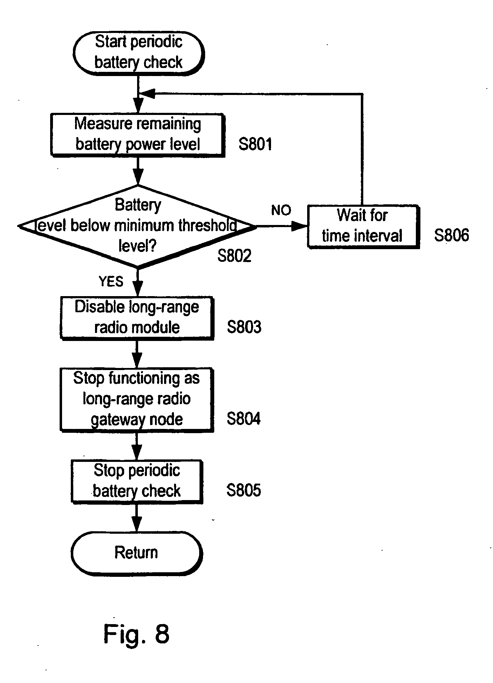

Referring to Figures 2, 3, 5 and 8, a flow diagram illustrating a method of measuring a battery level and taking action to cause a new long-range gateway to be elected is shown. The method allows a terminal 5 to determine whether it has enough battery power to serve as a long-range gateway node for a sufficiently long period of time (e.g. > 1 hour) since the long-range base station function consumes battery power at a much higher rate than other functions. The method is performed by nodes that activate the long-range radio module 8 and use the long-range network client function and/or the long-range base station function to transmit and receive packets, in this example, IPv6 packets.

The control and routing module 13 measures the remaining battery level (step S801) and determines whether the remaining battery level falls below a predefined threshold (step S802). The threshold may be expressed in terms of a percentage (or fraction) of battery power remaining (e.g. 0 to 100%) or operational time remaining based on current power dissipation (e.g. 0 to 20 hours).

If the control and routing module 13 finds that the battery level falls below the pre-defined threshold level, then it disables the long-range radio module 8 including the long-range network client 21 and base station 22 functions (step S803), thus stopping the node from performing the function of long-range gateway node 35 (step S804). The control and routing module 13 terminates the periodic battery check procedure (step S805).

If the control and routing module 13 finds that the remaining battery level does not fall below the pre-defined threshold, then it waits for a pre-defined time interval, e.g. between 0 to 60 seconds (step S806) and measures the remaining battery level again (step S801).

A security mechanism is implemented to ensure that only authorized nodes can connect to the network 33 (Figure 5) and perform the functions described earlier. Security can be implemented both at the radio level and at the network layer level, e.g. IPv6 level.

At the radio level, security will depend on the type of connectivity used. For example, 3GPP WCDMA uses authentication and over-the-air encryption using a subscriber identification module (SIM) card. IEEE 802.11 uses authentication and over-the-air encryption using mechanisms, such as WiFi Protected Access (WPA) based on shared passphrases. At the network layer level, IP security (IPsec) can be used to protect message exchanges.

If 3GPP WCDMA is used for long-range network connectivity, a terminal 5 operating as a long-range base station 22 (Figure 3b) implements the functions of Node B, Serving GPRS Support Node (SGSN), Gateway GPRS Support Node (GGSN) and Home Location Register (HLR). Thus, standard 3GPP security mechanisms allow a terminal 5 providing active long-range base station functionality 22 (Figure 3b) to authenticate other terminals providing long-range client functionality 21 that connect to it. These standards also allow a terminal 5 providing long-range client functionality 21 to authenticate 3GPP WCDMA long-range base stations 22 (Figure 3b) implemented by other terminals 5. To implement a distributed SIM-based authentication, all SIM cards (which may be implemented within the removable memory module 16) belonging to terminals 5 operating in the same geographical area (e.g. long-range network 11) include common security keys.

Alternatively, the terminals 5 may contain a set of security keys, one per team or organizational unit operating within the same geographical area.

In this example, a node may operate in one of three modes: normal, emergency and stealth. Normal mode is a default mode in which a node usually operates. In stealth mode, the long-range base station 22 is disabled and the short-range base station 20 minimizes radio emissions. In emergency mode, the node operates in the same way as in stealth mode, but also is operable to connect to short-range networks of other teams, using the "emergency mode" message hereinbefore described, since it has become separated from its team and may be in danger.

Emergency and stealth modes may be enabled by manual activation, e.g. by the user pushing a button or entering emergency dial code, or by voice activation, e.g. by the user entering a secret phrase.

Emergency and stealth modes may also be activated automatically. The routing and control module 13 may activate emergency and stealth modes bases upon an analysis of geographical location data (e.g. Global Positioning System data) and the number of connections to other nodes belonging to its team.

For example, the routing and control module 13 may activate stealth mode if it determines that the terminal 5 is in a dangerous position where strong radio emissions should be avoided. The routing and control module 13 may enable emergency mode if it determines that the terminal 5 is in a dangerous position and is separated from the other members of its team by more than a given distance.

The short-range and long-range base station functions 20, 22 that are active broadcast network identifiers whose format is dependent on the radio technology used. The short-range base station 20 broadcasts a "team identifier", while the long-range base station 22 broadcasts an "organization identifier" where an "organization" comprises multiple "teams". Nodes are configured with a team identifier for the team to which they belong, an organization identifier for the organization to which the team belongs and a complete list of other team identifiers within that organization. This information is stored in the removable memory module 16. Nodes use the stored information and the broadcast information received to determine which base stations belong to its team or organization and to which it can connected. As hereinbefore described, the format of the broadcast information depends on the radio technology. For example, 3GPP WCDMA networks broadcast a PLMN identifier and IEEE 802.11 networks broadcast a SSID.

It will be appreciated that many modifications may be made to the embodiments hereinbefore described. For example, although embodiments of the invention have been described in which 3G and Wireless LAN radio technologies are used, other wireless technologies, may be used such as WiMAX (IEEE 802.16) and Orthogonal Frequency Division Multiplexing (OFDM) wireless technology.

The wireless network need not be a mobile ad-hoc network in which all the terminals are mobile. For example, one or more of the terminals, such as a terminal operating as a short-range gateway and/or a terminal operating as a long-range gateway, may be fixed (or temporarily static).

**Claims**

**1.** A node (5) for wireless networking comprising:

first means (7) for providing first wireless network connectivity;

seconde means (8) for providing second wireless network connectivity,

wherein the second wireless network connectivity has a longer range than said first wireless network connectivity; and controlling means (13) configured to carry out first processing to determine whether the node (5) should serve as a short-range gateway (36) using said first means for connecting nodes in a short-range wireless network (9,) and to carry out second processing to determine whether the node (5) should serve as a long-range gateway (35) using said second means for co-operating with another long-range gateway in another short-nsnge network ($9_2$, $9_3$) to connect the short-range wireless networks ($9_1$, $9_2$, $9_3$) so as to form a long-range wireless network (11), wherein the first processing comprises determining whether another node (5) is serving as a short-range gateway (36) in the short-range wireless network($9_1$), and if no other node is serving as a short-range gateway (36), determining that the node (5) should serve as a short-range gateway (36): and wherein the second processing comprises, collecting messages from other nodes (5) and determining whether the node should serve as a long-range gateway in preference to other nodes based on a pre-determined sat of rules and using sets of characteristics for the node and the other nodes, the characteristics including at least one of a node identifier, a message number, a long-range network identifier, weighting information indicating desirability to be elected, a randomly-generated number and battery level information; and routing means configured, in response to the controlling means determining that the node should serve as the short-range gateway for the short-range wireless network, to route data packets between other nodes in the short-range wireless network, and in response to determining that the node (5) should serve as the long-range gateway (35), to route data between the short-range network ($9_1$) and the other short-range network ($9_2$),

2. A node according to claim 1, wherein the routing means routes packets according to internet Protocol version 6.

3. A node according to claim 1 or 2, wherein the controlling means (13) is configured, in response to determining that the node (5) should serve as the long-range gateway (35), to periodically transmit a message identifying the node as the long-range gateway serving the short-range network ($9_1$).

4. A node according to any preceding claim, wherein the controlling means (13) is configured to search for at least one long-range base station and, in response to failing to find at least one long-range base station, to configure the second means (8) to provide long-range base station functionality such that the node serves as a long-range gateway (35).

5. A node according to any preceding claim, wherein the node (5) includes a battery for supplying energy to the node and the controlling means (13) is configured, in response to determining that the node should serve as the long-range gateway (35), to check that the battery has at least a predetermined level of stored energy.

6. A node according to claim 5, wherein the controlling means (13) is configured, in response to determining that the battery has less than the predetermined level of stored energy, to stop the node serving as the long-range gateway (35).

7. A node according to any preceding claim, wherein the controlling means (13) is configured, In response to determining that the node (5) should serve as the long-range gateway (35), to check whether there is a competing long-range gateway.

8. A node according to any preceding claim, wherein the node (5) is selectively operable as a long-range client providable with a long-range network connection by a long-range base station and/or as a long-range base station to provide a long-range network connection to a long-range client.

9. A node according to any preceding claim, wherein the controlling means (13) is configured to search for at least one long-range base station (35) in other short-range networks ($9_2$) providing a first long-range gateway and, in response to finding at least one long-range base station in another short-range network ($9_2$), to determine whether there is already a long-range client in the short-range network ($9_2$) connected to the long-range base station in the other short-range network providing a second long-range gateway and, in response to determining that there is no long-range client in the short-range network, to initiate an election to determine whether the node should serve as the long-range client for providing the second long-range gateway.

10. A node according to claim 9, wherein the controlling means is configured to search for the at least one long-range base station by listening for messages transmitted by long-range base stations (35).

**11.** A node according to claim 9 or 10, wherein the controlling means (13) is configured, in response to determining that there is no long-range client in the short-range network corresponding to the long-range base station in the other short-range network, to transmit a message listing a set of characteristics of the node.

**12.** A node according to any one of claims 9 to 11, wherein the controlling means (13) is operable, when the node (5) is operating as a long-range base station, to transmit a long-range network identifier.

**13.** A node according to any one of claims 9 to 12, wherein the controlling means (13) is operable, when the node (5) is operating as a long-range client, to receive a long-range network identifier from a long-range base station and, in dependence upon the long-range network identifier, to determine whether to connect to or to participate in an election to become a long-range client to connect to the long-range base station.

**14.** A node according to any preceding claim, wherein the weighting information includes data indicating signal strength and data indicating seniority or role of the node's user.

**15.** A node according to any preceding of claim, wherein the controlling means (13) is configured to determine whether the node (5) is winner based on a predetermined set of rules and using the sets of characteristics.

**16.** A node according to any preceding of claim, wherein the controlling means (13) is configured to determine whether the node is runner-up based on a predetermined set of rules and using the sets of characteristics.

**17.** A node according to any preceding claim, wherein the controlling means (13) is configured to determine whether the node (5) should serve as a back-up long-range gateway (37) for co-operating with the other long-range gateway in the event that a serving gateway fails.

**18.** A node according to claim 17, wherein the controlling means (13) is configured, in response to determining that the node (5) should serve as the back-up gateway (37), to monitor the serving gateway and to serve as the gateway in response to detecting that the serving gateway fails.

**19.** A node according to any preceding claim, further including means for managing the short-range network (9) wherein the node is selectively operable as a control node (38) to manage the short-range network.

**20.** A node according to claim 19, wherein the short-range network managing means is configured, when the node is operating as the control node (38), to monitor quality of service and, in dependence on the quality of service, to selectively allow nodes to join the short-range network.

**21.** A node according to claim 19 or 20, wherein the short-range network managing means is configured, when the node is operating as the control node (38), to determine a number of connected nodes in the network and, in dependence on the number of connected nodes, to selectively allow further nodes (5) to join the short-range network.

**22.** A node according to any one of claims 19 to 21, wherein short-range network managing means is configured, when the node is operating as the control node (38), to selectively allow communication between nodes in the short-range network ($9_1$).

**23.** A node according to any one of claims 19 to 22, wherein the short-range network managing means is configured, when the node is operating as the control node (38), in response to a node joining the short-range network ($9_1$), to notify other nodes in the short-range network of the identity of the node.

**24.** A node according to any one of claims 19 to 23, wherein the short-range network managing means is configured, when the node is operating as the control node (38), to cause filtering of communication within the short-range network ($9_1$).

**25.** A node according to any preceding claim, further including means for managing a network wherein the node is selectively operable as a network operations node (39) to send instructions to nodes.

**26.** A node according to claim 25, wherein the network managing means is configured, when the node is operating as the network operations node (39), in response to a change in network organisation, to transmit a notification of the change to nodes (5).

27. A node according to any preceding claim, wherein the controlling means (13) is configured, in response to receiving notification of a change in network organisation, to update configuration data stored in a memory module (28).

28. A node according to claim 26 or 27, wherein the change in network organisation is change in network identifies, a change in team lists and/or a change in an allowable application operable by nodes.

29. A node according to any preceding claim, including a removably connectable memory module (18), wherein the controlling means (13) is arranged to read configuration data from the memory module and to operate according to said data.

30. A node according to claim 29, wherein the memory module (16) is arranged to store a user identity, a user role, a list of team members, an organisation network identifier and/or a list of teams.

31. A node according to claim 30, wherein the controlling means (13) is configured to receive notification of the identity of a node (5) and to update the list of team members.

32. A node according to any one of claims 29 to 31, wherein the memory module is arranged to store information about allowable and/or unallowable applications (14) and the controlling means (13) is arranged to selectively route communication to and from applications provided at the node (5) according to the application information.

33. A node according to any preceding claim, wherein the node (5) is configured to transmit at least one of a user identity, a user role and an organisation network identifier to a short-range base station (36) when joining a short-range network or a long-range network

34. A node according to any preceding claim, wherein the controlling means (13) is configured, in response to receiving an instruction to enter a stealth mode, to limit transmission by the long-range wireless network connectivity providing means and to limit transmission by the short-range wireless network connectivity providing means.

35. A node according to claim 34, wherein the controlling means, while the node (5) is in stealth mode, disables a long-range base station and suspends determining whether the node should serve as the long-range gateway.

36. A node according to any preceding claim, wherein the controlling means (13) is configured, in response to receiving an instruction to enter an emergency mode, to transmit a message indicating that the node (5) is in an emergency node when joining a short-range network.

37. A node according to any preceding claim, further comprising means for determining a location of the node (5) and to provide the location to the controlling means.

38. A node according to any preceding claim, wherein the node (5) is selectively operable as a short-range client (34) providable with a short-range network connection by a short-range base station and/or as a short-range base station to provide a short-range network connection to a short-range client.

39. A node according to claim 38, wherein the controlling means is configured, when the node (5) is operating as a short-range network base station, to transmit a short-range network identifier.

40. A node according to claim 38 or 39, wherein the controlling means (13) is configured, when the node is operating as a short-range base station, to scan for conflicting short-range base stations (36) in the short range network and, in response to finding a conflicting short-range base station, to wait for a randomly-generated period of time, to check whether the conflicting short-range base station is still transmitting and, in response to determining that the conflicting short-range base station is still transmitting, to cause the node to cease transmitting at a currently-used short-range frequency.

41. A node according to claim 40, wherein the controlling means (13) is configured to cause the node (5) to transmit at a different frequency or to cease operating as a short-range base station.

42. A node according to any one of claims 40 to 41, wherein the controlling means (13) is operable, when the node is operating as a short-range client (34), to receive a short-range network identifier from a short-range base station (36) and, in dependence upon the short-range network identifier, to determine whether to connect to the short-range base station.

43. A node according to any preceding claim, wherein the controlling means (13) is configured, when the node is operating as a long-range base station (35), to scan for conflicting long-range base stations and, in response to finding a conflicting long-range base station, to wait for a randomly-generated period of time, to check whether the conflicting long-range base station is still transmitting and, in response to determining that the conflicting long-range base station is still transmitting, to cause the node to cease transmitting at a currently used long-range network frequency.

44. A node according to claim 43, wherein the controlling means (13) is configured to cause the node to transmit at a different frequency or to cease operating as a long-range base station.

45. A node according to any preceding claim, wherein the first wireless network connectivity is in accordance with IEEE 802.11.

46. A node according to any preceding claim, wherein the first means (7) is configured to provide connectivity to network according to a Wideband Code Division Multiple Access (WCDMA) standard or according to IEEE 802.16.

47. A node according to any preceding claim, wherein the second means (8) is configured to provide connectivity to a public land mobile network (PLMN).

48. A node according to any preceding claim, wherein the second means (8) is configured to provide connectivity to a Wideband Code Division Multiple Access (WCDMA) network.

49. A node according to claim 48, wherein the second means (8) is configured to conform to high-speed packet access (HSPA) protocols.

50. A node according to any preceding claim, wherein the second means (8) is configured to provide connectivity to network according to IEEE 802.16.

51. A node according to any preceding claim, in the form of portable terminal.

52. A network comprising a plurality of nodes (5), the network comprising:

a first node configured to serve as a short-range gateway (36) for connecting nodes in a short-range wireless network (9); and
a second node according to any preceding claim configured to serve as the long-range gateway (35) for co-operating with the other long-range gateway.

53. A network according to claim 52, further comprising:

a third, different node configured to serve as a back-up long-range gateway (37).

54. A network according to claim 52 or 53, wherein the second node is configured to serve as a first long-range gateway (35) for co-operating with a first other long-range gateway (35) and the network further comprises:

a fourth node configured to serve as a seconde long-range gateway for co-operating with a second other long-range gateway in another short-range network (9).

55. A network according to claim 54, wherein the third, different node is configured to serve as a back-up long-range gateway (35) for the second long-range gateway or the network comprises another node configured to serve as a back-up long-range gateway for the second long-range.

56. A network according to any one of claims 52 to 55, further comprising:

a fifth node (38) configured to manage the short-range network by selectively allowing nodes to join the short-range network.

**57.** A network according to any one of claims 52 to 56, wherein the first node (38) is further configured to manage the short-range network by selectively allowing nodes to join the short-range network.

**58.** A network according to any one of claims 52 to 57, further comprising:

a sixth node (38, 39) configured to manage a network by sending instructions to nodes in short-range networks connected by the long-range network.

**59.** A method of controlling a node (5) for wireless networking, the method comprising:

determining whether the node (5) should serve as a short-range gateway (36) for connecting nodes in a short-range wireless network (9); and
determining whether the node should serve as a long-range gateway (35) for co-operating with another long-range gateway in another shoft-rangs network ($9_2$) to connect the short-range wireless network ($9_1$, $9_2$) so as to form a long-range wireless network, having a connectivity with a longer range than said short range wireless network, wherein:

determining whether the node should serve as a short-range gateway (36) comprises determining whether another node (5) is serving as a short-range gateway (36) in the short wireless network ($9_1$); and if no other node is serving as a short-range gateway (36), determining that the node (5) should serve as a short-range gateway (3B): and
determining whether the node should serve as a long-range network gateway (35) comprises, collecting messages from other nodes (5) and determining whether the node should serve as a long-range gateway in preference to other nodes based on a pre-determined set of rules and using sets of characteristics for the node and the other nodes, the characteristics including at least one of a node identifier a message number, a long-range network identifier, weighting information indicating desirability to be elected, a randomly-garterated number and battery level information

**60.** A computer program comprising computer-readable instructions which, when executed by a computer, causes a computer to perform the method according to claim 59.

**61.** A computer readable medium storing a computer program according to claim 60.

**Patentansprüche**

**1.** Knoten (5) für drahtlosen Netzbetrieb, umfassend:

ein erstes Mittel (7) zum Bereitstellen erster drahtlose Netzkonnektivität;
ein zweites Mittel (8) zum Bereitstellen zweiter drahtlose Netzkonnektivität, wobei die zweite drahtlose Netzkoruaektivität einen längeren Bereich als die erste drahtlose Netzkonnektivität hat: und
ein Steuermittel (13), das konfiguriert ist, um erste Verarbeitung auszuführen, um zu bestimmen, ob der Knoten (5) als ein Nahbereichs-Gateway (36), das das erste Mittel nutzt, zum Verbinden von Knoten in einem Nahbereichsdrahtlosnetz ($9_1$) fungieren soll, und um zweite Verarbeitung auszuführen, um zu bestimmen, ob der Knoten (5) als ein Weitbereichs-Gateway (35), das das zweite Mittel nutzt, zum Kooperieren mit einem anderen Weitbereichs-Gateway in einem anderen Nahbereichsnetz ($9_2$, $9_3$) fungieren soll, um die Nahbereichsdrahtlosnetze ($9_1$, $9_2$, $9_3$) zu verbinden, um ein drahtloses Weitbereichsnetz (11) zu bilden, wobei die erste Verarbeitung umfasst, zu bestimmen, ob ein anderer Knoten (5) als ein Nahbereichs-Gateway (36) in dem Nahbereichsdrahtlosnetz ($9_1$) fungiert, und, wenn kein anderer Knoten als ein Nahbereichs-Gateway (36) fungiert, zu bestimmen, dass der Knoten (5) als ein Nahbereichs-Gateway (36) fungieren soll; und wobei die zweite Verarbeitung umfasst, Nachrichten von anderen Knoten (5) zu erfassen und zu bestimmen, ob der Knoten als ein Weitbereichs-Gateway bevorzugt vor anderen Knoten basierend auf einem im Voraus bestimmten Satz von Regeln und unter Verwendung von Sätzen von Charakteristika für den Knoten und die anderen Knoten fungieren soll, wobei die Charakteristika mindestens eines einer Knotenkennung, einer Nachrichtertnummer, einer Weitbereichsnetzkennung, Gewichtungsinformationen, die die Wünschbarkeit angeben, ausgewählt zu werden, einer zufallsbestimmt erzeugten Zahl und Batteriepegel-Informationen enthalten; und Weiterleitungsmittel, die konfiguriert sind, um als Reaktion auf die Bestimmung des Steuermittels, dass der Knoten als das Nahbereichs-Gateway für das drahtlose Nahbereichsnetz fungieren soll, Datenpakete zwischen anderen Knoten in dem Nabbereichsdrahtlosnetz weiterzuleiten, und als Reaktion auf die Bestimmung, dass der Knoten (5) als das Weitbereichs-Gateway (35) fungieren soll, Daten zwischen dem Nahbereichsnetz ($9_1$) und dem anderen Nahbereichsnetz ($9_2$) weiterzuleiten.

2. Knoten nach Anspruch 1, wobei das Weiterleitungsmittel Pakete gemäß dem Internet-Protokoll Version 6 weiterleitet.

3. Knoten nach Anspruch 1 oder 2, wobei das Steuermittel (13) konfiguriert ist, um als Reaktion auf die Bestimmung, dass der Knoten (5) als das Weitbereichs-Gateway (35) fungieren soll, regelmäßig wiederkehrend eine Nachricht zu übertragen, die den Knoten als das Weitbereichs-Gateway kennzeichnet, das das Nahbereichsnetz ($9_1$) versorgt.

4. Knoten nach einem der vorstehenden Ansprüche, wobei das Steuermittel (13) konfiguriert ist, um nach mindestens einer Weitbereichs-Basisstation zu suchen und als Reaktion darauf, dass nicht mindestens eine Weitbereichs-Basisstation gefunden wird, das zweite Mittel (8) zu konfigurieren, um Weitbereichs-Basisstations-Funktionalität derart bereitzustellen, dass der Knoten als ein Weitbereichs-Gateway (35) fungiert.

5. Knoten nach einem der vorstehenden Ansprüche, wobei der Knoten (5) eine Batterie zur Zuführung von Energie zu dem Knoten enthält und das Steuermittel (13) konfiguriert ist, um als Reaktion auf die Bestimmung, dass der Knoten als das Weitbereichs-Gateway (35) fungieren soll, zu prüfen, dass die Batterie mindestens einen im Voraus bestimmten Pegel an gespeicherter Energie aufweist.

6. Knoten nach Anspruch 5, wobei das Steuermittel (13) konfiguriert ist, um als Reaktion auf die Bestimmung, dass die Batterie weniger als den im Voraus bestimmten Pegel an gespeicherter Energie aufweist, zu stoppen, dass der Knoten als das Weitbereichs-Gateway (35) fungiert.

7. Knoten nach einem der vorstehenden Ansprüche, wobei das Steuermittel (13) konfiguriert ist, um als Reaktion auf die Bestimmung, dass der Knoten (5) als das Weitbereichs-Gateway (35) fungieren soll, zu prüfen, ob ein konkurrierendes Weitbereichs-Gateway vorhanden ist.

8. Knoten nach einem der vorstehenden Ansprüche, wobei der Knoten (5) selektiv als ein Weitbereichs-Client betriebsfähig ist, der mit einer Weitbereichsnetz-Verbindung durch eine Weitbereichs-Basisstation und/oder als eine Weitbereichs-Basisstation bereitstellbar ist, um einem Weitbereichs-Client eine Weitbereichsnetz-Verbindung bereitzustellen.

9. Knoten nach einem der vorstehenden Ansprüche, wobei das Steuermittel (13) konfiguriert ist, um nach mindestens einer Weitbereichs-Basisstation (35) in anderen Nahbereichsnetzen ($9_2$), die ein erstes Weitbereichs-Gateway bereitstellen, zu suchen und als Reaktion darauf, dass mindestens eine Weitbereichs-Basisstation in einem anderen Nahbereichsnetz ($9_2$) gefunden wird, zu bestimmen, ob bereits ein Weitbereichs-Client in dem Nahbereichsnetz ($9_2$) mit der Weitbereichs-Basisstation in dem anderen Nahbereichsnetz verbunden ist, das ein zweites Weitbereichs-Gateway bereitstellt, und als Reaktion auf die Bestimmung, dass kein Weitbereichs-Client in dem Nahbereichsnetz vorhanden ist, eine Auswahl einzuleiten, um zu bestimmen, ob der Knoten als der Weitbereichs-Client zum Bereitstellen des zweiten Weitbereichs-Gateways fungieren soll.

10. Knoten nach Anspruch 9, wobei das Steuermittel konfiguriert ist, um nach der mindestens einen Weitbereichs-Basisstation durch Horchen auf Nachrichten, die von Weitbereichs-Basisstationen (35) übertragen werden, zu suchen.

11. Knoten nach Anspruch 9 oder 10, wobei das Steuermittel (13) konfiguriert ist, um auf die Bestimmung, dass kein Weitbereichs-Client in dem Nahbereichsnetz, das mit der Weitbereichs-Basisstation in dem anderen Nahbereichsnetz korrespondiert, vorhanden ist, eine Nachricht zu übertragen, in der ein Satz von Charakteristika des Knotens aufgelistet ist.

12. Knoten nach einem der Ansprüche 9 bis 11, wobei das Steuermittel (13) betriebsfähig ist, wenn der Knoten (5) als eine Weitbereichs-Basisstation operiert, um eine Weitbereichsnetz-Kennung zu übertragen.

13. Knoten nach einem der Ansprüche 9 bis 12, wobei das Steuermittel (13) betriebsfähig ist, um, wenn der Knoten (5) als ein Weitbereichs-Client operiert, eine Weitbereichsnetz-Kennung von einer Weitbereichs-Basisstation zu empfangen und in Abhängigkeit von der Weitbereichsnetz-Kennung zu bestimmen, ob Verbindung damit hergestellt oder an einer Auswahl, um ein Weitbereichs-Client zu werden, teilgenommen werden soll, um die Verbindung mit der Weitbereichs-Basisstation herzustellen.

**14.** Knoten nach einem der vorstehenden Ansprüche, wobei die Gewichtungsinformationen Daten enthalten, die die Signalstärke und Datenanzeige-Seniorität oder Funktion des Knotenbenutzers anzeigen.

**15.** Knoten nach einem der vorstehenden Ansprüche, wobei das Steuermittel (13) konfiguriert ist, um basierend auf einem im Voraus bestimmten Satz von Regeln und unter Verwendung der Sätze der Charakteristika zu bestimmen, ob der Knoten (5) Gewinner ist.

**16.** Knoten nach einem der vorstehenden Ansprüche, wobei das Steuermittel (13) konfiguriert ist, um basierend auf einem im Voraus bestimmten Satz von Regeln und unter Verwendung der Sätze der Charakteristika zu bestimmen, ob der Knoten Zweiter ist.

**17.** Knoten nach einem der vorstehenden Ansprüche, wobei das Steuermittel (13) konfiguriert ist, um zu bestimmen, ob der Knotens (5) als ein Reserve-Weitbereichs-Gateway (37) zum Kooperieren mit dem anderen Weitbereichs-Gateway in dem Fall, dass das versorgende Gateway ausfällt, fungieren soll.

**18.** Knoten nach Anspruch 17, wobei das Steuermittel (13) konfiguriert ist, um als Reaktion auf die Bestimmung, dass der Knotens (5) als das Reserve-Gateway (37) fungieren soll, das versorgende Gateway zu überwachen und als Reaktion auf die Detektion, dass das versorgende Gateway ausfällt, als das Gateway zu fungieren.

**19.** Knoten nach einem der vorstehenden Ansprüche, weiter ein Mittel zum Verwalten des Nahbereichsnetzes (9) enthaltend, wobei der Knoten selektiv als ein Steuerknoten (38) zum Verwalten des Nahbereichsnetzes betriebsfähig ist.

**20.** Knoten nach Anspruch 19, wobei das Nahbereichsnetz-Verwaltungsmittel konfiguriert ist, um, wenn der Knoten als der Steuerknoten (38) operiert. Dienstgüte zu überwachen und in Abhängigkeit von der Dienstgüte selektiv Knoten zu gestatten, sich dem Nahbereichsnetz anzuschließen.

**21.** Knoten nach Anspruch 19 oder 20, wobei das Nahbereichsnetz-Verwaltungsmittel konfiguriert ist, um, wenn der Knoten als der Steuerknoten (38) operiert, eine Zahl von verbundenen Knoten in dem Netz zu bestimmen und in Abhängigkeit von der Zahl der verbundenen Knoten weiteren Knoten (5) zu gestatten, sich dem Nahbereichsnetz anzuschließen.

**22.** Knoten nach einem der Ansprüche 19 bis 21, wobei das Nahbereichsnetz-Verwaltungsmittel konfiguriert ist, um, wenn der Knoten als der Steuerknoten (38) operiert, selektiv Kommunikation zwischen Knoten in dem Nahbereichs-netx ($9_1$) zu gestatten.

**23.** Knoten nach einem der Ansprüche 19 bis 22, wobei das Nahbereichsnetz-Verwaltungsmittel konfiguriert ist, um, wenn der Knoten als der Steuerknoten (38) operiert, als Reaktion darauf, dass sich ein Knoten dem Nahbereichsnetz ($9_1$) anschließt, andere Knoten in dem Nahbereichsnetz über die Kennung des Knotens zu benachrichtigen.

**24.** Knoten nach einem der Ansprüche 19 bis 23, wobei das Nahbereichsnetz-Verwaltungsmittel konfiguriert ist, um, wenn der Knoten als der Steuerknoten (38) operiert, Filterung der Kommunikation in dem Nahbereichsnetz ($9_1$) zu bewirken.

**25.** Knoten nach einem der vorstehenden Ansprüche, weiter ein Mittel zum Verwalten eines Netzes enthaltend, wobei der Knoten selektiv als ein Netzbetriebsknoten (39) betriebsfähig ist, um Anweisungen an Knoten zu senden.

**26.** Knoten nach Anspruch 25, wobei das Netzverwaltungsmittel konfiguriert ist, um, wenn der Knoten als der Netzbetriebsknoten (39) operiert, als eine Reaktion auf eine Änderung in der Netzorganisation eine Benachrichtigung der Änderung an Knoten (5) zu übertragen.

**27.** Knoten nach einem der vorstehenden Ansprüche, wobei das Steuermittel (13) konfiguriert ist, um als Reaktion auf den Empfang einer Benachrichtigung einer Änderung in der Netzorganisation Konfigurationsdaten, die in einem Speichermodul (28) gespeichert sind, zu aktualisieren.

**28.** Knoten nach Anspruch 26 oder 27, wobei die Änderung der Netzorganisation eine Änderung der Netzkennung, eine Änderung der Teamliste und/oder eine Änderung einer zulässigen Anwendung, die durch Knoten betriebsfähig ist, darstellt.

29. Knoten nach einem der vorstehenden Ansprüche, ein abnehmbares, anschließbares Speichermodul (16) enthaltend, wobei das Steuermittel (13) angeordnet ist, um Konfigurationsdaten aus dem Speichermodul zu lesen und entsprechend den Daten zu operieren.

30. Knoten nach Anspruch 29, wobei das Speichermodul (16) angeordnet ist, um eine Benutzerkennung, eine Benutzerfunktion, eine Liste von Teammitgliedern, eine Organisationsnetzkennung und/oder eine Liste von Teams zu speichern.

31. Knoten nach Anspruch 30, wobei das Steuermittel (13) konfiguriert ist, um eine Benachrichtigung der Kennung eines Knoten (5) zu empfangen und um die Liste der Teammitglieder zu aktualisieren.

32. Knoten nach einem der Ansprüche 29 bis 31, wobei das Speichermodul angeordnet ist, um Informationen über zulässige und/oder unzulässige Anwendungen (14) zu speichern, und das Steuermittel (13) angeordnet ist, um selektiv Kommunikation zu und von Anwendungen zu leiten, die an dem Knoten (5) gemäß der Anwendungsinformationen bereitgestellt werden.

33. Knoten nach einem der vorstehenden Ansprüche, wobei der Knoten (5) konfiguriert ist, um mindestens eines einer Benutzerkennung, einer Benutzerfunktion und einer Organisationsnetzkennung an eine Nahbereichs-Basisstation (36) bei Anschluss an ein Nahbereichsnetz oder ein Weitbereichsnetz zu übertragen.

34. Knoten nach einem der vorstehenden Ansprüche, wobei das Steuermittel (13) konfiguriert ist, um als Reaktion auf den Empfang einer Anweisung zum Eintritt in einen Tarnmodus Übertragungen über das Weitbereichsdrahtlosnetz-Konnektivitätsbereitstellungsmittel zu beschränkten und um Übertragungen über das Nahbereichsdrahtlosnetz-Konnektivitätsbareitstellungsmittel zu beschränken.

35. Knoten nach Anspruch 34, wobei das Steuermittel, während der Knoten (5) in einem Tarnmodus ist, eine Weitbereichs-Basisstation deaktiviert und die Bestimmung, ob der Knoten als das Weitbereichs-Gateway fungieren soll, unterbindet.

36. Knoten nach einem der vorstehenden Ansprüche, wobei das Steuermittel (13) konfiguriert ist, um als Reaktion auf den Empfang einer Einweisung zum Eintritt in einen Notfallmodus eine Nachricht zu übertragen, die anzeigt, dass der Knoten (5) bei Anschluss an ein Nahbereichsnetz in einem Notfallmodus ist.

37. Knoten nach einem der vorstehenden Ansprüche, weiter ein Mittel zum Bestimmen eines Standorts des Knotens (5) und zum Bereitstellen des Standorts an das Steuermittel umfassend.

38. Knoten nach einem der vorstehenden Ansprüche, wobei der Knoten (5) selektiv als ein Nahbereichs-Client (34), dem eine Nahbereichsnetzverbindung durch eine Nahbereichs-Basisstation bereitstellbar ist, und/oder als eine Nahbereichs-Basisstation, um einem Nahbereichs-Client eine Nahbereichsnetzverbindung bereitzustellen, betriebsfähig ist.

39. Knoten nach Anspruch 38, wobei das Steuermittel konfiguriert ist, um, wenn der Knoten (5) als eine Nahbereichsnetz-Basisstation operiert, eine Nahbereichsnetz-Kennung zu übertragen,

40. Knoten nach Anspruch 38 oder 39, wobei das Steuermittel (13) konfiguriert ist, um, wenn der Knoten als eine Nahbereichs-Basisstation operiert, nach in Konflikt stehenden Nahbereichs-Basisstationen (36) in dem Nahbereichsnetz zu suchen und als Reaktion auf das Finden einer in Konflikt stehenden Nahbereichs-Basisstation für eine zufallsbestimmt erzeugte Zeitperiode zu warten, um zu prüfen, ob die in Konflikt stehende Nahbereichs-Basisstation noch überträgt, und als Reaktion auf die Bestimmung, dass die in Konflikt stehende Nahbereichs-Basisstation noch überträgt, zu bewirken, dass der Knoten die Übertragung bei einer gegenwärtig verwendeten Nahbereichsfrequenz einstellt.

41. Knoten nach Anspruch 40, wobei das Steuermittel (13) konfiguriert ist, um zu bewirken, dass der Knoten (5) bei einer anderen Frequenz überträgt oder aufhört, als eine Nahbereichs-ßasisstation zu operieren.

**42.** Knoten nach einem der Ansprüche 40 bis 41, wobei das Steuermittel (13) betriebsfähig ist, um, wenn der Knoten als ein Nahbereichs-Client (34) operiert, eine Nahbereichsnetz-Kennung von einer Nahbereichs-Basisstation (36) zu empfangen und in Abhängigkeit von der Nahbereichsnetz-Kennung zu bestimmen, ob es sich der Nahbereichs-Basisstation anschließt.

**43.** Knoten nach einem der vorstehenden Ansprüche, wobei das Steuermittel (13) konfiguriert ist, um, wenn der Knoten als eine Weitbereichs-Basisstation (35) operiert, nach in Konflikt stehenden Weitbereichs-Basisstationen zu suchen und als Reaktion auf das Finden einer in Konflikt stehenden Weitbereichs-Basisstation für eine zufallsbestimmt erzeugte Zeitperiode zu warten, um zu prüfen, ob die in Konflikt stehende Weitbereichs-Basisstation noch überträgt, und als Reaktion auf die Bestimmung, dass die in Konflikt stehende Weitbereichs-Basisstation noch überträgt, zu bewirken, dass der Knoten die Übertragung bei einer gegenwärtig verwendeten Weitbereichsfrequenz einstellt.

**44.** Knoten nach Anspruch 43, wobei das Steuermittel (13) konfiguriert ist, um zu bewirken, dass der Knoten bei einer anderen Frequenz überträgt oder die Operation als eine Weitbereichs-Basisstation einstellt.

**45.** Knoten nach einem der vorstehenden Ansprüche, wobei die erste drahtlose Netzkonnektivität in Übereinstimmung mit IEEE 802.11 ist.

**46.** Knoten nach einem der vorstehenden Ansprüche, wobei das erste Mittel (7) konfiguriert ist, um dem Netz Konnektivität gemäß einem Breitband-Codemultiplexzugriff-(WCDMA)-Standard oder gemäß IEEE 802.16 bereitzustellen.

**47.** Knoten nach einem der vorstehenden Ansprüche, wobei das zweite Mittel (8) konfiguriert ist, um Konnektivität zu einem öffentlichen Landfunknetz (PLMN) bereitzustellen.

**48.** Knoten nach einem der vorstehenden Ansprüche, wobei das zweite Mittel (8) konfiguriert ist, um TConnektivität zu einem Breitband-Codemultiplexzugriffs-(WCDMA)-Netz bereitzustellen.

**49.** Knoten nach Anspruch 48, wobei das zweite Mittel (8) konfiguriert ist, um Hochgeschwindigkeits-Paketzugriffs-(HSPA)-Protokollen zu entsprechen.

**50.** Knoten nach einem der vorstehenden Ansprüche, wobei das zweite Mittel (8) konfiguriert ist, um Netzkonnektivität gemäß IEEE 802.16 bereitzustellen.

**51.** Knoten nach einem der vorstehenden Ansprüche in der Form eines tragbaren Endgeräts.

**52.** Netz, eine Vielzahl von Knoten (5) umfassend, das Netz umfassend:

einen ersten Knoten, der konfiguriert ist, um als ein Nahbereichs-Gateway (36) zum Verbinden von Knoten in einem Nahbereichs-brahtlosnetz (9) zu fungieren; und
einen zweiten Knoten nach einem der vorstehenden Ansprüche, der konfiguriert ist, um als das Weitbereichs-Gateway (35) zum Kooperieren mit dem anderen Weitbereichs-Gateway zu fungieren.

**53.** Netz nach Anspruch 52, weiter umfassend:

einen dritten, anderen Knoten, der konfiguriert ist, um als ein Reserve-Weitbereichs-Gateway (37) zu fungieren.

**54.** Netz nach Anspruch 52 oder 53, wobei der zweite Knoten konfiguriert ist, um als ein erstes Weitbereichs-Gateway (35) zum Kooperieren mit einem ersten anderen Weitbereichs-Gateway (35) zu fungieren, und das Netz weiter umfasst:

einen vierten Knoten, der konfiguriert ist, um als ein zweites Weitbereichs-Gateway zum Kooperieren mit einem zweiten anderen Weitbereichs-Gateway in einem anderen Nahbereichsnetz (9) zu fungieren.

**55.** Netz nach Anspruch 54, wobei der dritte, andere Knoten konfiguriert ist, um als ein Reserve-Weitbereichs-Gateway (35) für das zweite Weitbereichs-Gateway zu fungieren, oder das Netz einen weiteren Knoten umfasst, der konfiguriert ist, um als ein Raserve-Weitbereichs-Gateway für den zweiten Weitbereich zu fungieren.

**56.** Netz nach einem der Ansprüche 52 bis 55, weiter umfassend:

einen fünften Knoten (38), der konfiguriert ist, um das Nahbereichsnetz durch selektives Zulassen, dass Knoten sich dem Nahbereichsnetz anschließen, zu verwalten.

**57.** Netz nach einem der Ansprüche 52 bis 56, wobei der erste Knoten (38) weiter konfiguriert ist, um das Nahbereichsnetz durch selektives Zulassen, dass Knoten sich dem Nahbereichsnetz anschließen, zu verwalten.

**58.** Netz nach einem der Ansprüche 52 bis 57, weiter umfassend:

einen sechsten Knoten (38, 39), der konfiguriert ist, um ein Netz durch Senden von Anweisungen an Knoten in Nahbereichsnetzen, die über das Weitbereichsnetz verbunden sind, zu verwalten.

**59.** Verfahren zum Steuern eines Knotens (5) für drahtlosen Netzbetrieb, das Verfahren umfassend:

Bestimmen, ob der Knoten (5) als ein Nahbereichs-Gateway (36) zum Verbinden von Knoten in einem Nahbereichs-Drahtlosnetz (9) fungieren soll; und
Bestimmen, ob der Knoten als ein Weitbereichs-Gateway (35) zum Kooperieren mit einem anderen Weitbereichs-Gateway in einem anderen Nahbereichsnetz ($9_2$) fungieren soll, um die Nahbereichs-Drahtlosnetze ($9_1$, $9_2$) zu verbinden, um ein Weitbereichs-Drahtlosnetz mit einer Konnektivität mit einem größeren Bereich als das Nahbereichs-Drahtlosnetz zu bilden, wobei:

Bestimmen, ob der Knoten als ein Nahbereichs-Gateway (36) fungieren soll, umfasst, zu bestimmen, ob ein anderer Knoten (5) als ein Nahbereichs-Gateway (36) in dem Nahbereichs-Drahtlosnetz ($9_1$) fungiert; und wenn kein anderer Knoten als ein Nahbereichs-Gateway (36) fungiert, zu bestimmen, dass der Knoten (5) als ein Nahbereichs-Gateway (36) fungieren soll; und
Bestimmen, ob der Knoten als ein Weitbereichsnetz-Gateway (35) fungieren soll, umfasst, Nachrichten von anderen Knoten (5) zu erfassen und zu bestimmen, ob der Knoten als ein Weitbereichs-Gateway bevorzugt vor anderen Knoten basierend auf einen im Voraus bestimmten Satz von Regeln und unter Verwendung von Sätzen von Charakteristika für den Knoten und die anderen Knoten fungieren soll, wobei die Charakteristika mindestens eines einer Knotenkenriung, einer Nachrichtennummer, einer Weitbereichsnetzkennung. Gewichtungsinformationen, die die Wünschbarkeit angeben, ausgewählt zu werden, einer zufallsbestimmt erzeugten Zahl und Batteriepegel-Informationen enthalten.

**60.** Computerprogramm, computerlesbare Anweisungen umfassend, die, wenn sie von einem Computer ausgeführt werden, bewirken, dass ein Computer das Verfahren nach Anspruch 59 ausführt.

**61.** Computerlesbares Medium, auf dem ein Computerprogramm nach Anspruch 60 gespeichert ist.

## Revendications

**1.** Noeud (5) destiné à une mise en réseau sans fil, comportant :

un premier moyen (7) destiné à fournir une première connectivité de réseau sans fil ;
un second moyen (8) destiné à fournir une seconde connectivité de réseau sans fil, dans lequel la seconde connectivité de réseau sans fil présente une portée supérieure à ladite première connectivité de réseau sans fil ; et

un moyen de commande (13) configuré de manière à mettre en oeuvre un premier traitement en vue de déterminer si le noeud (5) devrait être utilisé en qualité de passerelle de courte portée (36) utilisant ledit premier moyen pour connecter des noeuds dans un réseau sans fil de courte portée ($9_1$) et à mettre en oeuvre un second traitement en vue de déterminer si le noeud (5) devrait être utilisé en qualité de passerelle de longue portée (35) utilisant ledit second moyen de manière à coopérer avec une autre passerelle de longue portée dans un autre réseau de courte portée ($9_2$, $9_3$) pour connecter les réseaux sans fil de courte portée ($9_1$, $9_2$, $9_3$) de manière à former un réseau sans fil de longue portée (11), dans lequel le premier traitement comporte l'étape consistant à déterminer si un autre noeud (5) est utilisé en qualité de passerelle de courte portée (36) dans le réseau sans fil de courte portée ($9_1$), et, si aucun autre noeud n'est utilisé en qualité de passerelle de courte portée (36), à déterminer que le noeud (5) devrait être utilisé en qualité de passerelle de courte portée (36) ; et dans lequel le second traitement comporte l'étape consistant à recueillir des messages en provenance d'autres noeuds (5) et à déterminer si le noeud devrait être utilisé en qualité de passerelle de longue portée préférablement à d'autres noeuds sur la base d'un ensemble prédéterminé de règles et à utiliser des ensembles de caractéristiques pour le noeud et les autres noeuds, les caractéristiques incluant au moins un élément parmi un identifiant de noeud, un numéro de message, un identifiant de réseau de longue portée, des informations de pondération indiquant l'opportunité d'être choisi, un nombre généré de manière aléatoire et des informations connexes au niveau de charge de la batterie ; et un moyen d'acheminement configuré, en réponse à la détermination par le moyen de commande que le noeud devrait être utilisé en qualité de passerelle de courte portée pour le réseau sans fil de courte portée, de manière à acheminer des paquets de données entre d'autres noeuds dans le réseau sans fil de courte portée, et en réponse à la détermination que le noeud (5) devrait être utilisé en qualité de passerelle de longue portée (35), à acheminer des données entre le réseau de courte portée ($9_1$) et l'autre réseau de courte portée ($9_2$).

2. Noeud selon la revendication 1, dans lequel le moyen d'acheminement achemine des paquets selon le protocole Internet version 6.

3. Noeud selon la revendication 1 ou 2, dans lequel le moyen de commande (13) est configuré, en réponse à la détermination que le noeud (5) devrait être utilisé en qualité de passerelle de longue portée (35), de manière à transmettre périodiquement un message identifiant le noeud en tant que la passerelle de longue portée desservant le réseau de courte portée ($9_1$).

4. Noeud selon l'une quelconque des revendications précédentes, dans lequel le moyen de commande (13) est configuré de manière à rechercher au moins une station de base de longue portée et, en réponse à l'échec de cette recherche d'au moins une station de base de longue portée, à configurer le second moyen (8) afin qu'il fournisse une fonctionnalité de station de base de longue portée de sorte que le noeud est utilisé en qualité de passerelle de longue portée (35).

5. Noeud selon l'une quelconque des revendications précédentes, dans lequel le noeud (5) comporte une batterie pour alimenter le noeud, et le moyen de commande (13) est configured, en réponse à la détermination que le noeud devrait être utilisé en qualité de passerelle de longue portée (35), pour contrôler que la batterie présente au moins un niveau prédéterminé d'énergie stockée.

6. Noeud selon la revendication 5, dans lequel le moyen de commande (13) est configuré, en réponse à la détermination que la batterie présente un niveau d'énergie inférieur au niveau prédéterminé d'énergie stockée, pour mettre hors tension le noeud utilisé en qualité de passerelle de longue portée (35).

7. Noeud selon l'une quelconque des revendications précédentes, dans lequel le moyen de commande (13) est configuré, en réponse à la détermination que le Noeud (5) devrait être utilisé en qualité de passerelle de longue portée (35), pour vérifier s'il existe une passerelle de longue portée concurrente.

8. Noeud selon l'une quelconque des revendications précédentes, dans lequel le noeud (5) est exploitable de manière sélective, en tant qu'un périphérique client de longue portée pouvant recevoir une connexion réseau de longue portée, par une station de base de longue portée et/ou en tant qu'une station de base de longue portée pour fournir une connexion réseau de longue portée à un périphérique client de longue portée.

9. Noeud selon l'une quelconque des revendications précédentes, dans lequel le moyen de commande (13) est configuré de manière à rechercher au moins une station de base de longue portée (35) dans d'autres réseaux de courte portée ($9_2$) offrant une première passerelle de longue portée et, en réponse à la découverte d'au moins une station de base de longue portée dans un autre réseau de courte portée ($9_2$), à déterminer s'il existe déjà un périphérique client de longue portée dans le réseau de courte portée ($9_2$) connectés à la station de base de longue portée dans l'autre réseau de courte portée offrant une seconde passerelle de longue portée et, en réponse à la détermination qu'il n'existe aucun périphérique client de longue portée dans le réseau de courte portée, à initier un processus de choix destiné à déterminer si le noeud devrait être utilisé en qualité de périphérique client de longue portée pour délivrer la seconde passerelle de longue portée.

10. Noeud selon la revendication 9, dans lequel le moyen de commande est configuré de manière à rechercher au moins une station de base de longue portée en écoutant des messages transmis par des stations de base de longue portée (35).

11. Noeud selon la revendication 9 ou 10, dans lequel le moyen de commande (13) est configuré, en réponse à la détermination qu'il n'existe aucun périphérique client de longue portée dans le réseau de courte portée correspondant à la station de base de longue portée dans l'autre réseau de courte portée, de manière à transmettre un message répertoriant un ensemble de caractéristiques du noeud.

**12.** Noeud selon l'une quelconque des revendications 9 à 11, dans lequel le moyen de commande (13) est exploitable, lorsque le noeud (5) opère en qualité de station de base de longue portée, pour transmettre un identifiant de réseau de longue portée.

**13.** Noeud selon l'une quelconque des revendications 9 à 12, dans lequel le moyen de commande (13) est exploitable, lorsque le noeud (5) opère en qualité de périphérique client de longue portée, de manière à recevoir un identifiant de réseau de longue portée en provenance d'une station de base de longue portée et, en fonction de l'identifiant de réseau de longue portée, à déterminer s'il convient de se connecter à, ou de prendre part à un processus de choix pour devenir un périphérique client de longue portée en vue d'une connexion à la station de base de longue portée.

**14.** Noeud selon l'une quelconque des revendications précédentes, dans lequel les informatisons de pondération incluent des données indiquant une puissance de signal et des données indiquant l'ancienneté ou le rôle de l'utilisateur du noeud.

**15.** Noeud selon l'une quelconque des revendications précédentes, dans lequel le moyen de commande (13) est configuré de manière à déterminer si le noeud (5) est le premier choisi sur la base d'un ensemble prédéterminé de règles et à utiliser les ensembles de caractéristiques.

**16.** Noeud selon l'une quelconque des revendications précédentes, dans lequel le moyen de commande (13) est configuré de manière à déterminer si le noeud est le deuxième choisi sur la base d'un ensemble prédéterminé de règles et à utiliser les ensembles de caractéristiques.

**17.** Noeud selon l'une quelconque des revendications précédentes, dans lequel le moyen de commande (13) est configuré de manière à déterminer si le noeud (5) devrait être utilisé en qualité de passerelle de longue portée de rechange (37) pour coopérer avec l'autre passerelle de longue portée dans l'éventualité de la défaillance d'une passerelle de service.

**18.** Noeud selon la revendication 17, dans lequel le moyen de commande (13) est configuré, en réponse à la détermination que le noeud (5) devrait être utilisé en qualité de passerelle de rechange (37), pour surveiller la passerelle de service et pour être utilisé en tant que passerelle en réponse à la détermination que la passerelle de service est défaillante.

**19.** Noeud selon l'une quelconque des revendications précédentes, comportant en outre un moyen destiné à gérer le réseau de courte portée (9), dans lequel le noeud est exploitable de manière sélective en tant qu'un noeud de commande (38) pour gérer le réseau de courte portée.

**20.** Noeud selon la revendication 19, dans lequel le moyen de gestion de réseau de courte portée est configuré, lorsque le noeud opère en qualité de noeud de commande (38), de manière à surveiller une qualité de service et, en fonction de la qualité de service, à autoriser de manière sélective des noeuds à rejoindre le réseau de courte portée.

**21.** Noeud selon la revendication 19 ou 20, dans lequel le moyen de gestion de réseau de courte portée est configuré, lorsque le noeud opère en qualité de noeud de commande (38), de manière à déterminer un nombre de noeuds connectés dans le réseau et, en fonction du nombre de noeuds connectés, pour autoriser de manière sélective d'autres noeuds (5) à rejoindre le réseau de courte portée.

**22.** Noeud selon l'une quelconque des revendications 19 à 21, dans lequel le moyen de gestion de réseau de courte portée est configuré, lorsque le noeud opère en qualité de noeud de commande (38), pour autoriser de manière sélective une communication entre les noeuds dans le réseau de courte portée ($9_1$).

**23.** Noeud selon l'une quelconque des revendications 19 à 22, dans lequel le moyen de gestion de réseau de courte portée est configuré, lorsque le noeud opère en qualité de noeud de commande (38), en réponse au fait qu'un noeud rejoint le réseau de courte portée ($9_1$), pour indiquer l'identité du noeud à d'autres noeuds dans le réseau de courte portée.

**24.** Noeud selon l'une quelconque des revendications 19 à 23, dans lequel le moyen de gestion de réseau de courte portée est configuré, lorsque le noeud opère en qualité de noeud de commande (38), de manière à occasionner un filtrage de communication au sein du réseau de courte portée ($9_1$).

**25.** Noeud selon l'une quelconque des revendications précédentes, comportant en outre un moyen pour gérer un réseau, dans lequel le noeud est exploitable de manière sélective en tant qu'un noeud d'opérations de réseau (39) pour envoyer des instructions à des noeuds.

**26.** Noeud selon la revendication 25, dans lequel le moyen de gestion de réseau est configuré, lorsque le noeud opère en qualité de noeud d'opérations de réseau (39), en réponse à une modification dans l'organisation du réseau, pour transmettre une notification de la modification à des noeuds (5).

**27.** Noeud selon l'une quelconque des revendications précédentes, dans lequel le moyen de commande (13) est configuré, en réponse à la réception de la notification d'une modification dans l'organisation du réseau, pour mettre à jour des données de configuration stockées dans un module de mémoire (28).

**28.** Noeud selon la revendication 26 ou 27, dans lequel la modification dans l'organisation du réseau est une modification au niveau de l'identifiant de réseau, une modification au niveau des listes d'équipe et/ou une modification au niveau d'une application admissible exploitable par des noeuds.

**29.** Noeud selon l'une quelconque des revendications précédentes, comportant un module de mémoire pouvant être connecté de manière amovible (16), dans lequel le moyen de commande (13) est agencé de manière à lire des données de configuration en provenance du module de mémoire et à opérer selon lesdites données de configuration.

**30.** Noeud selon la revendication 29, dans lequel le module de mémoire (16) est agencé de manière à stocker une identité d'utilisateur, un rôle d'utilisateur, une liste d'équipiers, un identifiant de réseau d'une organisation et/ou une liste d'équipes.

**31.** Noeud selon la revendication 30, dans lequel le moyen de commande (13) est configuré de manière à recevoir une notification connexe à l'identité d'un noeud (5) et à mettre à jour la liste d'équipiers.

**32.** Noeud selon l'une quelconque des revendications 29 à 31, dans lequel le module de mémoire est agencé de manière à stocker des informations connexes à des applications admissibles et/ou non admissibles (14) et le moyen de commande (13) est agencé de manière à acheminer de manière sélective une communication vers et depuis des applications délivrées au niveau du noeud (5) selon les informations d'application.

**33.** Noeud selon l'une quelconque des revendications précédentes, dans lequel le noeud (5) est configuré de manière à transmettre au moins l'un des éléments parmi une identité d'utilisateur, un rôle d'utilisateur et un identifiant de réseau d'organisation à une station de base de courte portée (36) en rejoignant un réseau de courte portée ou un réseau de longue portée.

**34.** Noeud selon l'une quelconque des revendications précédentes, dans lequel le moyen de commande (13) est configuré, en réponse à la réception d'une instruction de passer en mode furtif, de manière à limiter la transmission par le moyen de fourniture de connectivité de réseau sans fil de longue portée et de manière à limiter la transmission par le moyen de Fourniture de connectivité de réseau sans fil de courte portée.

**35.** Noeud selon la revendication 34, dans lequel le moyen de commande, alors que le noeud (5) est en mode furtif, désactive une station de base de longue portée et suspend l'étape consistant à déterminer si le noeud devrait être utilisé en qualité de passerelle de longue portée.

**36.** Noeud selon l'une quelconque des revendications précédentes, dans lequel le moyen de commande (13) est configuré, en réponse à la réception d'une instruction de passer à un mode d'urgence, de manière à transmettre un message indiquant que le noeud (5) est en mode d'urgence lorsqu'il rejoint un réseau de courte portée.

**37.** Noeud selon l'une quelconque des revendications précédentes, comportant en outre un moyen pour déterminer une localisation du noeud (5) et pour délivrer la localisation au moyen de commande.

**38.** Noeud selon l'une quelconque des revendications précédentes, dans lequel le noeud (5) est exploitable de manière sélective en tant que périphérique client de courte portée (34) pouvant recevoir une connexion de réseau de courte portée d'une station de base de courte portée et/ou en tant que station de base de courte portée pour fournir une connexion de réseau de courte portée à un périphérique client de courte portée.

**39.** Noeud selon la revendication 38, dans lequel le moyen de commande est configuré, lorsque le noeud (5) opère en qualité de station de base de réseau de courte portée, de manière à transmettre un identifiant de réseau de courte portée.

**40.** Noeud selon la revendication 38 ou 39, dans lequel le moyen de commande (13) est configuré, lorsque le noeud opère en qualité de station de base de courte portée, pour rechercher par balayage des stations de base de courte portée conflictuelles (36) dans le réseau de courte portée et, en réponse à la découverte d'une telle station de base de courte portée conflictuelle, pour attendre pendant une période de temps générée de manière aléatoire, en vue de contrôler si la station de base de courte portée conflictuelle continue à émettre et, en réponse à la détermination que la station de base de courte portée conflictuelle continue à émettre, à amener le noeud à cesser de transmettre à une fréquence de courte portée utilisée à ce moment.

**41.** Noeud selon la revendication 40, dans lequel le moyen de commande (13) est configuré de manière à amener le noeud (5) à émettre à une fréquence différente ou à cesser d'opérer en tant qu'une station de base de courte portée.

**42.** Noeud selon l'une quelconque des revendications 40 à 41, dans lequel le moyen de commande (13) est exploitable, lorsque le noeud opère en qualité de périphérique client de courte portée (34), pour recevoir un identifiant de réseau de courte portée d'une station de base de courte portée (36) et, en fonction de l'identifiant de réseau de courte portée, pour déterminer s'il convient de se connecter à la station de base de courte portée.

**43.** Noeud selon l'une quelconque des revendications précédentes, dans lequel le moyen de commande (13) est configuré, lorsque le noeud opère en qualité de station de base de longue portée (35), pour rechercher par balayage des stations de base de longue portée conflictuelles et, en réponse à la découverte d'une station de base de longue portée conflictuelle, pour attendre pendant une période de temps générée de manière aléatoire, en vue de contrôler si la station de base de longue portée conflictuelle continue à émettre et, en réponse à la détermination que la station de base de longue portée conflictuelle continue à émettre, à amener le noeud à cesser de transmettre à une fréquence de longue portée utilisée à ce moment.

**44.** Noeud selon la revendication 43, dans lequel le moyen de commande (13) est configuré de manière à amener le noeud à émettre à une fréquence différente ou à cesser d'opérer en tant qu'une station de base de longue portée.

**45.** Noeud selon l'une quelconque des revendications précédentes, dans lequel la première connectivité de réseau sans fil est conforme à la norme IEEE 802.11.

**46.** Noeud selon l'une quelconque des revendications précédentes, dans lequel le premier moyen (7) est configuré de manière à fournir une connectivité au réseau selon une norme d'accès multiple par répartition en code à large bande (WCDMA) ou selon la norme IEEE 802.16.

**47.** Noeud selon l'une quelconque des revendications précédentes, dans lequel le second moyen (8) est configuré de manière à fournir une connectivité à un réseau mobile public terrestre (PLMN).

**48.** Noeud selon l'une quelconque des revendications précédentes, dans lequel le second moyen (8) est configuré de manière à fournir une connectivité à un réseau d'accès multiple par répartition en code à large bande (WCDMA).

**49.** Noeud selon la revendication 48, dans lequel le second moyen (8) est configuré de manière à être en conformité à l'ensemble de protocoles d'accès ultrarapide aux paquets (HSPA).

**50.** Noeud selon l'une quelconque des revendications précédentes, dans lequel le second moyen (8) est configuré de manière à fournir une connectivité à un réseau selon la norme EEEE 802.16.

**51.** Noeud selon l'une quelconque des revendications précédentes, lequel présente la forme d'un terminal portable.

**52.** Réseau comportant une pluralité de noeuds (5), le réseau comportant :

un premier noeud configuré de manière à être utilisé en qualité de passerelle de courte portée (36) pour connecter des noeuds dans un réseau sans fil de courte portée (9) ; et

un deuxième noeud selon l'une quelconque des revendications précédentes configuré de manière à être utilisé en tant que passerelle de longue portée (35) en vue de coopérer avec l'autre passerelle de longue portée.

53. Réseau selon la revendication 52, comportant en outre :

un troisième noeud différent configuré de manière à être utilisé en qualité de passerelle de longue portée de rechange (37).

54. Réseau selon la revendication 52 ou 53, dans lequel le deuxième noeud est configuré de manière à être utilisé en tant que première passerelle de longue portée (35) en vue de coopérer avec une autre première passerelle de longue portée (35) et le réseau comporte en outre :

un quatrième noeud configuré de manière à être utilisé en tant que seconde passerelle de longue portée pour coopérer avec une autre seconde passerelle de longue portée dans un autre réseau de courte portée (9).

55. Réseau selon la revendication 54, dans lequel le troisième noeud différent est configuré de manière à être utilisé en qualité de passerelle de longue portée de rechange (35) pour la seconde passerelle de longue portée ou le réseau comporte un autre noeud configuré de manière à être utilisé en qualité de passerelle de longue portée de rechange pour la seconde passerelle de longue portée.

56. Réseau selon l'une quelconque des revendications 52 à 55, comportant en outre :

un cinquième noeud (38) configuré de manière à gérer le réseau de courte portée en autorisant de manière sélective des noeuds à rejoindre le réseau de courte portée.

57. Réseau selon l'une quelconque des revendications 52 à 56, dans lequel le premier noeud (38) est en outre configuré de manière à gérer le réseau de courte portée en autorisant de manière sélective des noeuds à rejoindre le réseau de courte portée.

58. Réseau selon l'une quelconque des revendications 52 à 57, comportant en outre :

un sixième noeud (38, 39) configuré de manière à gérer un réseau en envoyant des instructions à des noeuds dans des réseaux de courte portée connectés par le réseau de longue portée.

59. Procédé de commande d'un noeud (5) en vue d'une mise en réseau sans fil, le procédé comportant les étapes ci-dessous consistant à :

déterminer si le noeud (5) devrait être utilisé en qualité de passerelle de courte portée (36) pour connecter des noeuds dans un réseau sans fil de courte portée (9) ; et

déterminer si le noeud devrait être utilisé en qualité de passerelle de longue portée (35) pour coopérer avec une autre passerelle de longue portée dans un autre réseau de courte portée ($9_2$) pour connecter les réseaux sans fil de courte portée ($9_1$, $9_2$) de manière à former un réseau sans fil de longue portée présentant une connectivité d'une portée plus longue que ledit réseau sans fil de courte portée ; dans lequel l'étape consistant à :

déterminer si le noeud devrait être utilisé en qualité de passerelle de courte portée (36) comporte l'étape consistant à déterminer si un autre noeud (5) est utilisé en qualité de passerelle de courte portée (36) dans le réseau sans fil de courte portée ($9_1$) ; et si aucun autre noeud n'est utilisé en qualité de passerelle de courte portée (36), à déterminer que le noeud (5) devrait être utilisé en qualité de passerelle de courte portée (36) ; et

déterminer si le noeud devrait être utilisé en qualité de passerelle de réseau de longue portée (35) comporte les étapes consistant à recueillir des messages en provenance d'autres noeuds (5), déterminer si le noeud devrait être utilisé en qualité de passerelle de longue portée préférablement à d'autres noeuds sur la base d'un ensemble prédéterminé de règles et utiliser des ensembles de caractéristiques pour le noeud et les autres noeuds, les caractéristiques incluant au moins un élément parmi un identifiant de noeud, un numéro de message, un identifiant de réseau de longue portée, des informations de pondération indiquant l'opportunité d'être choisi, un nombre généré de manière aléatoire et des informations connexes au niveau de charge de la batterie.

60. Programme informatique comportant des instructions lisibles par un ordinateur, lequel, lorsqu'il est exécuté par un ordinateur, amène l'ordinateur à mettre en oeuvre le procédé selon la revendication 59.

61. Support lisible par un ordinateur stockant un programme informatique selon la revendication 60.

Fig. 1
(Prior Art)

Fig. 2

**Fig. 3a**          **Fig. 3b**

**Fig. 4**

Fig. 5

Short-range radio module
started or rebooted, or active
short-range gateway disappears

Wait for randomly-generated period    S601

Scan for short-range networks    S602

Produce list of available short-range networks    S603

At least one short-range network in list ?    S604

YES

NO

Remove networks with invalid identifiers from list    S609

Take over or continue role as short range gateway    S605

Select short-range network    S610

Disable short-range client    S606

Attempt connection to selected network    S611

Enable periodic short-range base station duplicate detection and conflict resolution procedure    S607

Connection and authentication successful ?    S612

YES

NO

Remove the unsuccessful network from list    S613

Start ad-hoc routing function    S608

A

Fig. 6

34

Long-range radio interface
disconnected or long-range module
started or rebooted

A

Scan for long-range radio networks      S614

Produce list of available long-range networks      S615

Check for presence of long-range gateway nodes      S616

At
least one long-range
radio network in list
?      S617

YES                          NO

Gateway
node detected for each
new available network
in list?      S622

YES

NO

Perform gateway
election procedure      S623

This
node won election
?      S624

NO

YES

A

Connect to long-range
network for which node elected      S625

Multicast result of winner of election      S626

Enable periodic battery check      S627

Enable long-range
base station function      S618

Enable long-range
gateway function      S619

Enable periodic battery check      S620

Enable periodic long-range
base station duplicate detection and
conflict resolution procedure      S621

Fig. 6

Continue

35

Check for conflict

B

Scan for other base stations — S701

At
least one other valid
base station detected
?    S702

NO → A

YES

Wait for randomly-generated period    S703

Scan again for other base stations    S704

Other
valid base station still
detected?    S705

NO → A

YES

Determine operating frequency    S706

Change radio frequency if
there is interference form
other valid base station
S708

YES

Multiple frequencies?    S707

NO

Disable internal base
station function and stop
operating as gateway node    S709

Return

A →

Non-valid
base station interfering on the
same frequency?    S710

NO → B

YES

Multiple frequencies?    S711

NO    YES

Warn user    S713

Change radio
frequency    S712

B

Fig. 7

36

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03084160 A

**Non-patent literature cited in the description**

- **M. CHATTERJEE ; SAJAL K. DAS ; D. TURGUT.** A Weighted Clustering Algorithm for Mobile Ad Hoc Networks. *Cluster Computing,* 2002, vol. 5, 193-204